# EUROPEAN PATENT APPLICATION

(11) **EP 2 381 161 A1**
(43) Date of publication of application: **26.10.2011**
(21) Application number: 09840040.1
(22) Date of filing: 17.11.2009
(51) Int. Cl.: F21S 2/00, F21V 15/01, F21V 23/00, G02F 1/1333, G02F 1/13357, G09F 9/00, H01R 13/631, H01R 33/02, F21Y 103/00

(54) **ILLUMINATING DEVICE, DISPLAY DEVICE AND TELEVISION RECEIVER**

(30) Priority: 13.02.2009 JP 2009031408
(71) Applicant: Sharp Kabushiki Kaisha, Osaka-shi, Osaka 545-8522 (JP)
(72) Inventor: CHO, Shiyoshi, Osaka-shi, Osaka 545-8522 (JP)
(74) Representative: Müller-Boré & Partner Patentanwälte
(86) International application number: PCT/JP2009/069466
(87) International publication number: WO 2010/092721

(57) **Abstract**

A backlight unit 12 includes cold cathode tubes 18, a chassis 14, inverter boards 20, and relay connectors 21. The chassis 14 houses the cold cathode tubes 18. The inverter boards 20 are arranged on a side of the chassis 14 opposite from the cold cathode tubes 18. A predetermined amount of clearance C is provided between a reference plane BS and each inverter board 20. Each inverter board 20 is configured to supply drive power to the cold cathode tubes 18. The relay connectors 21 are mounted to the chassis 14 and configured to relay power supply from the inverter boards 20 to the cold cathode tubes 18. Each inverter board 20 is connected to the relay connectors 21 so as to be removable in one direction along a board surface of the inverter board 20. Blocking portions 35 and 36 are provided on the chassis 14 side. The blocking portions 35 and 36 project from the reference plane BS toward ends portions 20e to 20g of the inverter board 20. Each blocking portion 35 or 36 extends from one end of the end portion 20e, 20f, or 20g to the other end. The clearance C between the reference plane BS and the inverter board 20 is blocked by the blocking portions 35 and 36.

## Description

### TECHNICAL FIELD

The present invention relates to a lighting device, a display device and a television receiver.

### BACKGROUND ART

A liquid crystal panel included in a liquid crystal display device such as a liquid crystal television receiver does not emit light. Therefore, a backlight unit that is required as a separate lighting unit. The backlight unit is arranged behind the liquid crystal panel (on an opposite side from the display surface). It includes a chassis, a number of cold cathode tubes, an optical member and an inverter board. The chassis has an opening in a surface on the liquid crystal panel side. The cold cathode tubes are housed in the chassis. The optical member includes a plurality of pieces (e.g. , a diffuser). It is arranged so as to cover the opening of the chassis and configured to effectively direct rays of light emitted from the cold cathode tubes toward the liquid crystal panel. The inverter board is provided for supplying power to the cold cathode tubes.

Patent Document 1 discloses an example configuration for making electrical connection between an inverter board and cold cathode tubes. In this configuration, the cold cathode tubes are arranged on the front side inside the chassis and the inverter board is arranged on the rear side outside the chassis. Relay connectors are mounted to the chassis so as to penetrate through the chassis. The cold cathode tubes are connected to internal ends of the relay connectors. The inverter board is connected to external ends of the relay connectors.
Patent Document 1: Japanese Unexamined Patent Publication No. 2007-280955

### Problem to be Solved by the Invention

In the above configuration, a predetermined amount of clearance may be provided between the chassis and the inverter board so that various parts mounted on the inverter board do not touch the chassis. If foreign substances enter the clearance, a problem including a short circuit may occur in the inverter board.

### DISCLOSURE OF THE PRESENT INVENTION

The present invention was made in view of the foregoing circumstances. An object of the present invention is to block foreign substances.

### Means for Solving the Problem

A lighting device of the present invention includes a light source, a chassis, at least one relay connector, and a blocking portion. The chassis houses the light source. The power supply board is arranged a predetermined amount of clearance away from a reference plane on a chassis side opposite from the light source. The power supply board is configured to supply drive power to the light source. The relay connector is mounted to the chassis such that the power supply board is connected thereto so as to be removable in one direction along a board surface of the power supply board. The relay connector is configured to relay power from the power supply board to the light source. The blocking portion projects from the reference plane on the chassis side toward an end portion of the power supply board. The blocking portion extends from one end of the end portion to another end with respect to an extending direction in which the end portion extends. The blocking portion blocks the clearance between the power supply board and the reference plane.

The power supply board is arranged the predetermined amount of clearance away from the reference plane relative to the chassis and connected to the relay connector so as to be removable therefrom in one direction along the board surface. The power supply board is configured to supply drive power to the light source via the relay connector. The clearance between the reference plane on the chassis side and the power supply board is blocked by the blocking portion. The blocking portion projects from the reference plane on the chassis side toward the end portion of the power supply board. Furthermore, the blocking portion extends from one end of the end portion to the other end thereof.

Preferred embodiments of the present invention may be configured as follows.
(1) The blocking portion projects toward an end portion of the power supply board at an end with respect to a first direction along a connecting direction of the power supply board to the relay connector. With this configuration, foreign substances are less likely to enter from the first direction along the connecting direction of the power supply board.

(2) The blocking portion includes a rear blocking portion. The rear blocking portion projects toward a rear end portion of the power supply board at a rear end with respect to the connecting direction of the power supply board to the relay connector. With this configuration, foreign substances are less likely to enter from the rear with respect to the connecting direction of the power supply board.

(3) The blocking portion includes a front blocking portion. The front blocking portion projects toward a front end portion of the power supply board at a front end with respect to the connecting direction of the power supply board to the relay connector. With this configuration, foreign substances are less likely to enter from the front with respect to the connecting direction of the power supply board.

(4) The blocking portion includes a rear blocking portion and a front blocking portion. The rear blocking portion projects toward a rear end portion of the power supply board at a rear end with respect to the connecting direction of the power supply board to the relay connector. The front blocking portion projects toward a front end portion of the power supply board at a front end with respect to the connecting direction. With this configuration, foreign substances are less likely to enter from the rear and the front with respect to the connecting direction of the power supply board.

(5) The blocking portion includes a first blocking portion and a second blocking portion. The first blocking portion projects toward an end portion of the power supply board at an end with respect to a first direction along a connecting direction of the power supply board to the relay connector. The second blocking portion projects toward an end portion of the power supply board at an end with respect to a second direction along the board surface of the power supply board and perpendicular to the first direction. The first blocking portion and the second blocking portion are connected to each other. With this configuration, foreign substances are less likely to enter from the first direction along the connecting direction of the power supply board and from the second direction perpendicular to the first direction.

(6) The blocking portion includes a pair of first blocking portions and a pair of second blocking portions. The first blocking portions project toward respective end portions of the power supply board at respective ends with respect to a first direction along a connecting direction of the power supply board to the relay connector. The second blocking portions project toward respective end portions of the power supply board at ends with respect to a second direction along the board surface of the power supply board and perpendicular to the first direction. With this configuration, foreign substances are less likely to enter from all directions along the board surface of the power supply board.

(7) The blocking portion projects toward an end portion of the power supply board at an end with respect to a second direction along the board surface of the power supply board and perpendicular to a first direction that is along the connecting direction of the power supply board to the relay connector. With this configuration, foreign substances are less likely to enter from the second direction perpendicular to the first direction along the connecting direction of the power supply board.

(8) The blocking portion projects toward end portions of the power supply board at ends with respect to a second direction along the board surface of the power supply board and perpendicular to the first direction that is along the connecting direction of the power supply board. With this configuration, foreign substances are less likely to enter from the second direction perpendicular to the first direction along the connecting direction of the power supply board.

(9) The blocking portion extends along an extending direction in which the end portion of the power supply board extends. With this configuration, the clearance is blocked by the blocking portion continuously for an extending length thereof.

(10) The blocking portion extends along an extending direction in which the end portion of the power supply board extends for an entire length of the end portion of the power supply board. With this configuration, the clearance is blocked by the blocking portion continuously for an entire length along the extending direction.

(11) The blocking portion is in contact with the end portion of the power board. With this configuration, the clearance is blocked by the blocking portion.

(12) The blocking portion extends along an extending direction in which the end portion of the power supply board extends. The blocking portion is in contact with the end portion of the power supply board for an entire length thereof. With this configuration, the clearance is blocked by the blocking portion continuously for an extending length thereof.

(13) The blocking portion extends along an extending direction in which the end portion of the power supply board extends for an entire length of the end portion of the power supply board. The blocking portion is in contact with the end portion of the power supply board for an entire length thereof. With this configuration, the clearance is blocked by the blocking portion continuously for an entire length along the extending direction.

(14) The lighting device further includes a positioning structure. The power supply board is movable between a non-connected position at which the power supply board is disconnected from the relay connector and a connected position at which the power supply board is connected to the relay connector. The positioning structure is provided for positioning the power supply board at the non-connected position with respect to at least one of the directions along the board surface of the power supply board relative to the chassis. During the movement of the power supply board to the non-connected position or from the non-connected position to the connected position, parts mounted on the power supply board are less likely to touch parts of the chassis.

(15) The positioning structure on a chassis side is connected to the blocking portion. With this configuration, the positioning structure and the blocking portion are arranged in a limited space. This contributes to a reduction in size or an improvement in design flexibility.

(16) The positioning structure includes a first positioning structure for positioning the power supply board in the first direction along the connecting direction of the power supply board to the relay connector. With this configuration, the power supply board is positioned with respect to the first direction along the connecting direction of the power supply board.

(17) The first positioning structure includes a first positioning protrusion and a first positioning recess. The first positioning protrusion is provided on either one of the power supply board and the chassis. The first positioning recess is provided in the other one of the power supply board and the chassis so as to receive the first positioning protrusion with a clearance with respect to the connecting direction. A front end portion of the first positioning protrusion is in contact with a front edge of the first positioning recess with respect to the connecting direction. A rear end portion of the first positioning protrusion is separated from a rear edge of the first positioning recess with respect to the connecting direction with the power supply board at the non-connected position. During the movement of the power supply board to the non-connected position, the power supply board is less likely to be displaced relative to the chassis to the front with respect to the connecting direction. The movement of the power supply board is allowed within a range corresponding to the clearance between the first positioning protrusion and the edge of the first positioning recess.

(18) The rear end portion of the first positioning protrusion is in contact with the rear edge of the first positioning recess with the power supply board at the connected position. During the movement of the power supply board from the non-connected position to the connected position, the power supply board is less likely to be displaced relative to the chassis to the front with respect to the connecting direction. Namely, a positional relationship between the power supply board at the connected position and the blocking portion is determined. Therefore, the blocking portion stably blocks the clearance.

(19) The first positioning protrusion and the first positioning recess are provided on the chassis and in the power supply board, respectively. To provide the first positioning protrusion on the power supply board, special design is required. In comparison to such a configuration, the power supply board can be prepared with the positioning structure at low cost.

(20) The first positioning recess is formed by cutting a part of the power supply board. When the power supply board is viewed from a side opposite from the chassis, a position of the first positioning protrusion in the first positioning recess can be confirmed. Therefore, the power supply board can be precisely positioned.

(21) The positioning structure includes a second positioning structure that positions the power supply board with respect to the second direction perpendicular to the first direction along the connecting direction of the power supply board to the relay connector. With this configuration, the power supply board at the non-connected position can be positioned with respect to the second direction perpendicular to the first direction along the connecting direction of the power supply board.

(22) The second positioning structure includes a second positioning portion provided on the chassis side. The second positioning portion is in contact with the power supply board during the movement of the power supply board between the non-connected position and the connected position. During the movement of the power supply board from the non-connected position to the connected position, the movement is guided by the second positioning portion. Therefore, the power supply board is stably moved. Furthermore, the positional relationship between the power supply board at the connected position and the blocking portion is determined. Therefore, the blocking portion stably blocks the clearance.

(23) The second positioning portion projects toward the power supply board. The power supply board has a cutout that receives the second positioning portion. The second positioning portion and the cutout are configured to position the power supply board with respect to the first direction with a front end of the second positioning portion being in contact with a front edge of the cutout of the power supply board at the non-connected position. With the second positioning portion and the cutout, the power supply board can be positioned with respect to the first direction and the second direction.

(24) The positioning structure includes two portions that away from each other in a front-rear direction along the connecting direction of the power supply board to the relay connector. With this configuration, the power supply board is further precisely positioned. Furthermore, the positioning structure may be arranged such that a person working on it can visually confirm the position thereof. With such a configuration, the positioning structure is easily viewed.

(25) The positioning structure is arranged at the end with respect to the second direction perpendicular to the first direction along the connecting direction of the power supply board to the relay connector. In comparison to the positioning structures provided around the center with respect to the second direction, design of layouts of wiring patterns or components on the power supply board is less likely to be limited.

(26) The positioning structure includes two portions arranged at the ends with respect to the second direction perpendicular to the first direction along the connecting direction of the power supply board to the relay connector. In comparison to the positioning structures provided around the center with respect to the second direction, design of layouts of wiring patterns or components on the power supply board is less likely to be limited. With the positioning structures at the ends with respect to he second direction, the power supply board is further precisely positioned.

(27) The lighting device further includes a cover mounted to the chassis between the power supply board and the chassis. The cover has a surface opposite the power supply board on the reference plane. The blocking portion is provided on the cover. In comparison to a blocking portion provided on the chassis, flexibility in design of the shape or the arrangement of the blocking portion improves.

(28) The chassis has a connector insertion hole that is a through hole in which the relay connector is inserted. The cover has a connector hole in which the relay connector is fitted. The connector hole continues into the connector insertion hole. With this configuration, the relay connector is mounted to the chassis with it passed through the connector insertion hole of the chassis and the connector hole of the cover.

(29) The connector insertion hole is larger than the connector hole. With this configuration, the relay connector is properly separated from the edge of the connector insertion hole of the chassis. Even when a high voltage current flows through the relay connector, the current is less likely to leak to the chassis side.

(30) The cover has a holding protrusion that is fitted in the connector insertion hole. The holding protrusion is provided between the edge of the connector insertion hole of the chassis and the relay connector. Therefore, the relay connector is properly isolated from the chassis. Furthermore, the cover can be positioned relative to the chassis.

(31) The cover has a plurality of connector holes for a plurality of relay connectors of the at least one relay connector. The connector holes are formed parallel to each other and along the second direction perpendicular to the first direction that is along the connecting direction of the power supply board to the relay connectors. The blocking portion is provided in an area of the cover between the adjacent connector holes. With this configuration, foreign substances are less likely to enter a clearance between the power supply board and the cover from the front with respect to the connecting direction via a gap between the adjacent relay connectors.

(32) The lighting device further includes a rib that projects from an edge of the connector hole toward the power supply board. The blocking portion is connected to the rib. With the rib connected to the blocking portion, no gap is present when viewed from the front with respect to the connecting direction. Therefore, foreign substances are properly blocked. Furthermore, high strength can be achieved.

(33) The lighting device further includes a board stopper on the chassis side. The board stopper is in contact with the power supply board from a side opposite from the chassis. With the board stopper, the power supply board is less likely to be deformed toward the side opposite from the chassis.

(34) The board stopper is in contact with the front end portion of the power supply board at the front end with respect to the connecting direction of the power supply board at the connected position. With the front end portion of the power supply board at the connected position held by the board stopper, the reliability of connection between the power supply board and the relay connector improves.

(35) The lighting device further includes a board support portion that projects from the reference plane toward a center of the power supply board. The board support portion is in contact with the power supply board so as to support the power supply board. With this configuration, a preferable positional relationship between the chassis and the power supply board can be maintained with respect to the direction perpendicular to the board surface of the power supply board. Therefore, the blocking portion constantly blocks the clearance.

(36) The board support portion is arranged adjacently to the relay connector. With this configuration, a deformation, such as a warp, around the relay connector is less likely to occur. Therefore, the reliability of connection between the power supply board and the relay connector improves.

Next, to solve the problem mentioned earlier, a display device of the present invention includes the above lighting device and a display panel configured to provide display using light from the lighting device.

In the lighting device that illuminates the display panel, foreign substances are less likely to enter the clearance between the reference plane on the chassis side and the power supply board. Therefore, high operational stability can be achieved.

An example of the display panel is a liquid crystal panel. Such a display device can be used as a liquid crystal display device in various applications including television receivers and personal computer displays. Such a display device is especially preferable in large-screen applications.

### Advantageous Effect of the Invention

According to the present invention, foreign substances can be blocked.

### BRIEF DESCRIPTION OF THE DRAWINGS

FIG. 1 is an exploded perspective view of a television receiver according to the first embodiment of the present invention;
FIG. 2 is a cross-sectional view of a display device along a long-side direction;
FIG. 3 is a plan view of a chassis with cold cathode tubes housed therein;
FIG. 4 is a bottom view of the chassis with inverter boards mounted thereto;
FIG. 5 is a magnified bottom view of the chassis with a cover mounted thereto;
FIG. 6 is a magnified partial bottom view illustrating positioning structures of the cover;
FIG. 7 is a cross-sectional view along line vii-vii in FIG. 6 with the inverter board at a removal position;
FIG. 8 is a cross-sectional view along line viii-viii in FIG. 6 with the inverter board at the removal position;
FIG. 9 is a cross-sectional view along line ix-ix in FIG. 6 with the inverter board at the removal position;
FIG. 10 is a cross-sectional view along line x-x in FIG. 6;
FIG. 11 is a cross-sectional view along line xi-xi in FIG. 6;
FIG. 12 is a cross-sectional view along line xii-xii in FIG. 6;
FIG. 13 is a magnified partial bottom view with the inverter board at a non-connected position;
FIG. 14 is a cross-sectional view along line xiv-xiv in FIG. 13 with the inverter board at the non-connected position;
FIG. 15 is a cross-sectional view along line xv-xv in FIG. 13 with the inverter board at the non-connected position;
FIG. 16 is a cross-sectional view along line xvi-xvi in FIG. 13 with inverter board at the non-connected position;
FIG. 17 is a magnified partial bottom view with the inverter board at the connected position;
FIG. 18 is a cross-sectional view along line xviii-xviii in FIG. 17 with the inverter board at the connected position;
FIG. 19 is a cross-sectional view along line xix-xix in FIG. 17 with the inverter board at the connected position;
FIG. 20 is a cross-sectional view along line xx-xx in FIG. 17;
FIG. 21 is a cross-section view along line xxi-xxi in FIG. 17;
FIG. 22 is a cross-section view along line xxii-xxii in FIG. 17;
FIG. 23 is a cross-section view along line xxiii-xxiii in FIG. 17;
FIG. 24 is a cross-sectional view illustrating a positional relationship between a rear stopper and an inverter board according to modification 1 of the first modification of the present invention;
FIG. 25 is a cross-sectional view illustrating a rear blocking portion according to the second modification of the first embodiment of the present invention;
FIG. 26 is a cross-sectional view illustrating a rear blocking portion according to the third modification of the first embodiment of the present invention; and
FIG. 27 is a cross-sectional view illustrating a rear blocking portion according to the fourth modification of the first embodiment of the present invention.

### EXPLANATION OF SYMBOLS

10: Liquid crystal display device (Display device)
11: Liquid crystal panel (Display panel)
12: Backlight unit (Lighting device)
14: Chassis
14b: Connector insertion hole
18: Cold cathode tube (Light source)
20: Inverter board (Power supply board)
27: Rib
30: Board support portion
31: First positioning protrusion (Positioning structure, first positioning structure)
32: First positioning recess (Positioning structure, first positioning structure)
33: Second positioning part (Positioning structure, second positioning structure)
34: Board stopper
35: First blocking portion (Blocking portion)
35a: Front blocking portion
35b: Rear blocking portion
36: Second blocking portion (Blocking portion)
37: Cutout
BS: Reference plane
C: Clearance
TV: Television receiver

### BEST MODE FOR CARRYING OUT THE INVENTION

### <First embodiment>

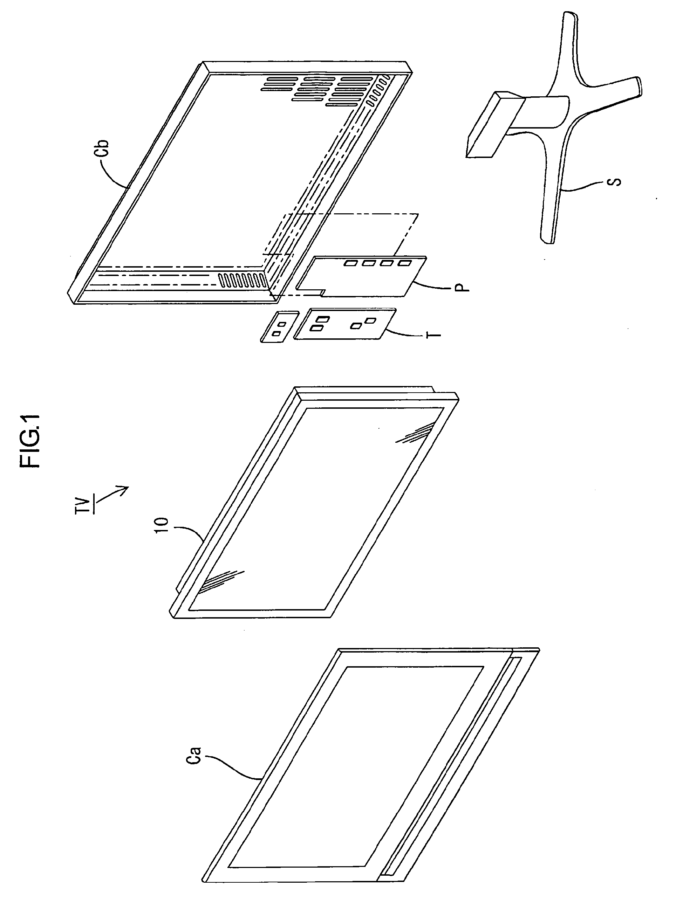

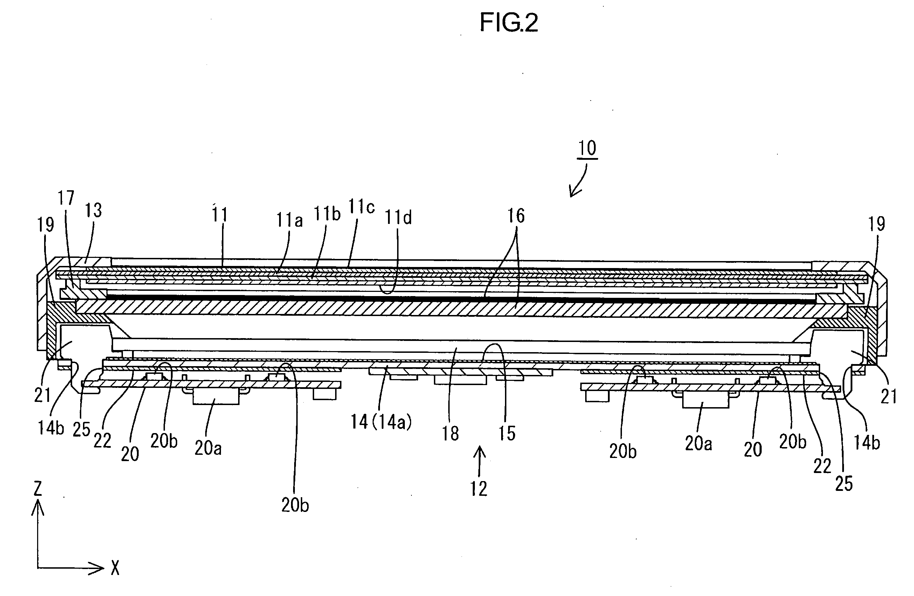

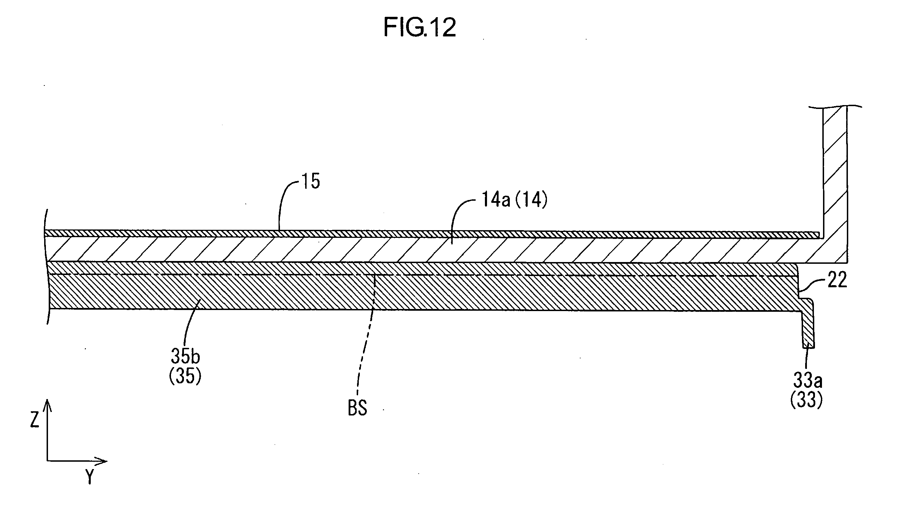

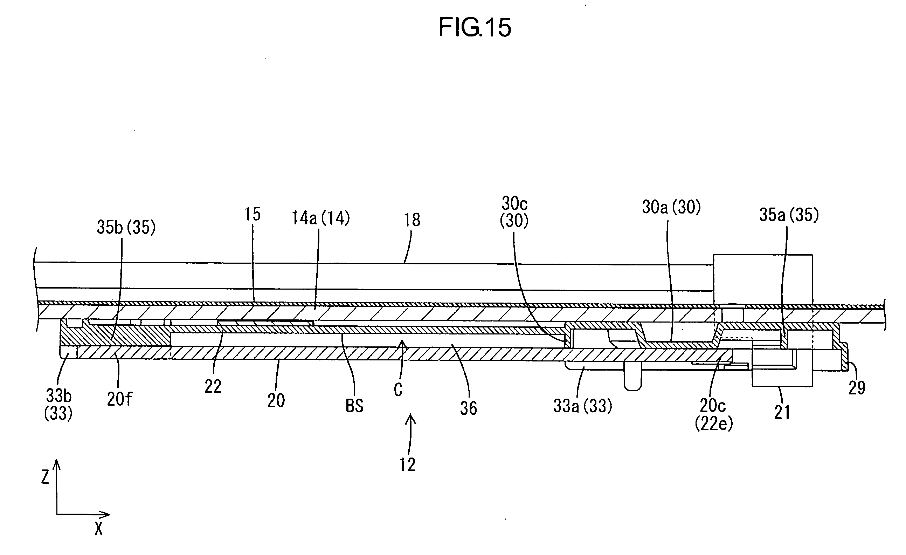

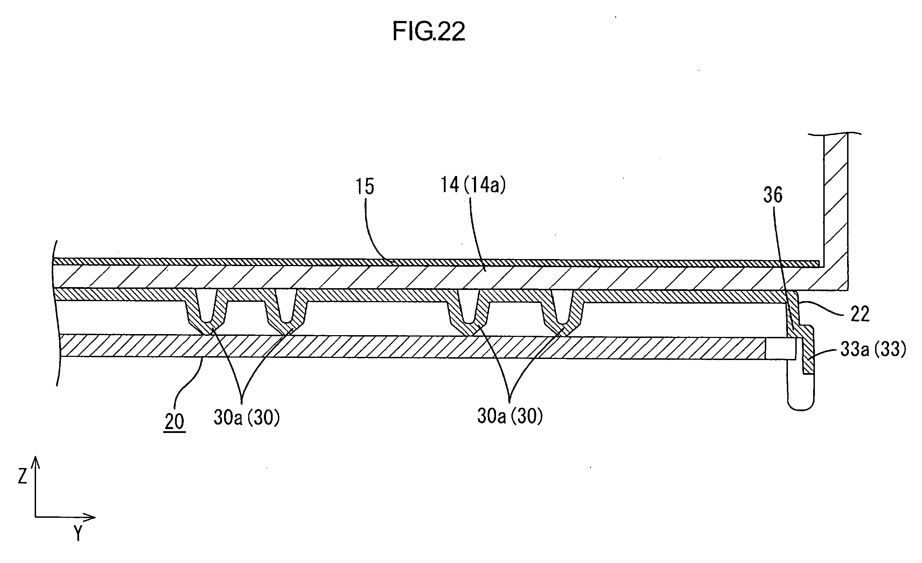

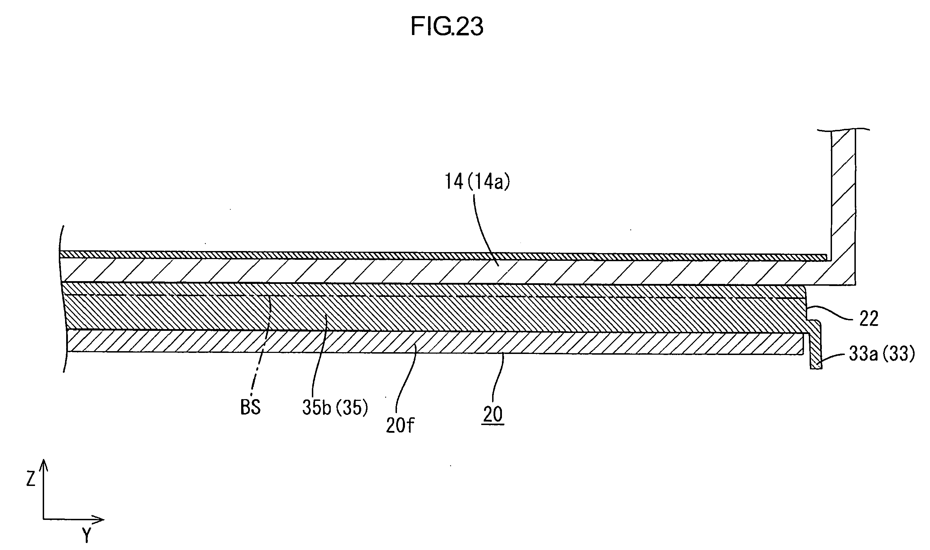

The first embodiment of the present invention will be explained with reference to FIGS. 1 to 23. In this embodiment, a liquid crystal display device 10 will be explained. X-axes, Y-axes and Z-axes are present in some drawings to indicate orientations of the liquid crystal display device 10. In FIG. 2, the upper side and the lower side correspond to the front side (the front side, the light exit side) and the rear side (the rear side, an opposite side from the light exit side), respectively.

As illustrated in FIG. 1, the television receiver TV includes the liquid crystal display device 10 (a display device), a front cabinet Ca, a rear cabinet Cb, a power source P, and a tuner T. The cabinets Ca and Cb sandwich the liquid crystal display device 10 therebetween. The liquid crystal display device 10 is housed in the cabinets Ca and Cb. The liquid crystal display device 10 has a landscape rectangular overall shape. As illustrated in FIG. 2, the liquid crystal display device 10 includes a liquid crystal panel 11, which is a display panel 11, and a backlight unit 12 (a lighting device), which is an external light source. The liquid crystal panel 11 and the backlight unit 12 are held together by a frame-shaped bezel 13.

Next, the liquid crystal panel 11 and the backlight unit 12 included in the liquid crystal display device 10 will be explained. The display panel 11 has a rectangular plan-view shape. As illustrated in FIG. 2, it includes a pair of glass substrates 11a and 11b bonded together with a predetermined gap therebetween and a liquid crystal layer (not shown) sealed between the glass substrates 11a and 11b. On the glass substrate 11a, switching components (e.g., TFTs), pixel electrodes and an alignment film are arranged. The switching components are connected to source lines and gate lines that are perpendicular to each other. The pixel electrodes are connected to the switching components. On the other glass substrate 11b, color filter having color sections of three primary colors of red (R), green (G) and blue (B) arranged in a matrix, counter electrodes and an alignment film are arranged. Image data and various kinds of control signals for displaying images are feed from a drive circuit board, which is not shown, to the source lines, the gate lines and the counter electrode. Polarizing plates 11c and 11d are arranged on outer surfaces of the glass substrates 11a and 11b, respectively.

As illustrated in FIG. 2, the backlight unit 12 is a so-called direct backlight including light sources that are arranged directly behind the liquid crystal panel 11. The backlight unit 12 includes a chassis 14, a reflection sheet 15, an optical member 16, a frame 17, a plurality of cold cathode tubes (light sources), and holders 19. The chassis 14 has a box-like overall shape and an opening on the front side (the light exit side, the liquid crystal panel 11 side). The reflection sheet 15 is placed inside the chassis 14. The optical member 16 includes a plurality of pieces. It is arranged so as to cover the opening. The frame 17 holds the optical member 16. The cold cathode tubes 18 are arranged parallel to each other and housed in the chassis 14. The holders 19 cover the respective ends of the cold cathode tubes 18 so as to block light. Each holder 19 has light reflectivity. The backlight unit 12 further includes inverter boards 20 (power supply boards), relay connectors 21, and covers 22. The inverter bards 20 are arranged on the rear of the chassis 14. The relay connectors 21 are provided for relaying power supply from the inverter boards 20 to the cold cathode tubes 18. The covers 22 are arranged between the chassis 14 and the inverter boards 20.

The chassis 14 is made of metal, for instance, aluminum. The chassis 14 includes a bottom plate 14a having a rectangular plan-view shape similar to the liquid crystal panel 11. The long-side direction and the short-side direction of the bottom plate 14a match the X-axis direction and the Y-axis direction indicated in the drawings, respectively. The bottom plate 14a has connector insertion holes 14b in end areas of the long dimension thereof. The connector insertion holes 14b are through holes in which the relay connectors 21 are inserted. A plurality of them (the number required for the cold cathode tubes 18 and the relay connectors 21) are arranged along the Y-axis direction (the short sides of the bottom plate 14a) so as to be parallel to each other. The reflection sheet 15 is made of white synthetic resin having high light reflectivity. It is placed over the inner surface of the chassis 14 so as to cover substantially an entire area and configured to reflect rays of light from the cold cathode tubes 18 toward the optical members 16 (the light exit side). The reflection sheet 15 has holes continue into the connector insertion holes 14b.

Each optical member 16 has a rectangular shape similar to the bottom plate 14a of the chassis 14 or the liquid crystal panel 11. The optical members 16 include a diffuser plate, a diffuser sheet, a lens sheet and a brightness enhancement sheet arranged in this order from the rear side. They are configured to convert light emitted from each cold cathode tube, which is a linear light source, into planar light.

The frame 17 is formed in a frame shape along the outer edges of the liquid crystal panel 11 and the optical members 16. The frame 17 is arranged in front of the optical members 16. The outer edges of the optical members 16 are sandwiched between the frame 17 and the holders 19. The frame 17 supports the liquid crystal panel 11 from the rear side. The liquid crystal panel 11 is sandwiched between the frame 17 and the bezel 13 that is arranged in front of the liquid crystal panel 11.

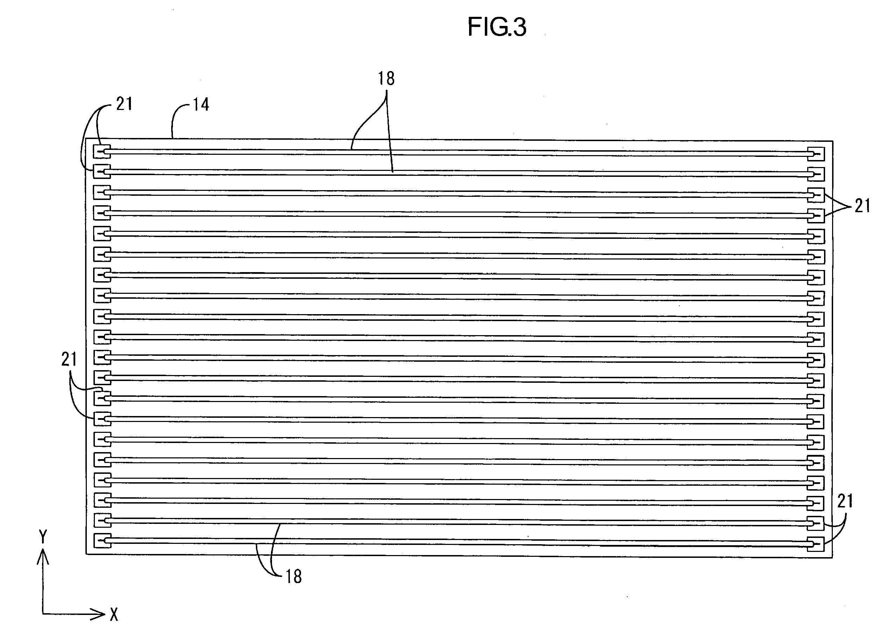

The cold cathode tubes 18 are one kind of linear light sources (tubular light sources). As illustrated in FIG. 3, the cold cathode tubes 18 are mounted inside the chassis 14 with the axial direction thereof (the X-axis direction) aligned with the long-side direction of the chassis 14. They are arranged such that the axes thereof are substantially parallel to each other and a predetermined distance away from each other in the short side direction of the chassis 14 (the Y-axis direction).

The cold cathode tubes 18 are one kind of discharge tubes. Each of them includes an elongated glass tube 18a, a pair of electrodes (not shown) and a pair of outer leads 18b. The glass tube 18a has a circular cross section and closed ends. The electrodes are enclosed in the glass tube 18a and located at the respective ends of the glass tube 18a. The outer leads 18b project from the respective ends of the glass tube 18a to the outside. Mercury that is a luminescent material is sealed in the glass tube 18a and a fluorescent material is applied to the inner walls of the glass tube 18a (neither the luminescent material nor the fluorescent material are shown). Each outer lead 18b is made of metal having electrical conductivity and formed in an elongated round post-like shape. It projects outward (in an opposite direction to the electrode) from the end of the glass tube 18a and extends along the axial direction (the X-axis direction). The internal end of the outer lead 18b is connected to the electrode inside the glass tube 18a and thus the outer lead 18b and the electrode are at the same potential.

Each holder 19 is made of white synthetic resin having high light reflectivity. As illustrated in FIG. 2, it extends along the short side of the chassis 14 and has a box-like shape with an opening on the rear side. The holders 19 are attached to the respective ends of the long side of the chassis 14 so as to collectively cover the respective ends of the cold cathode tubes 18 (non-light-emitting portions) arranged at the ends in a parallel layout.

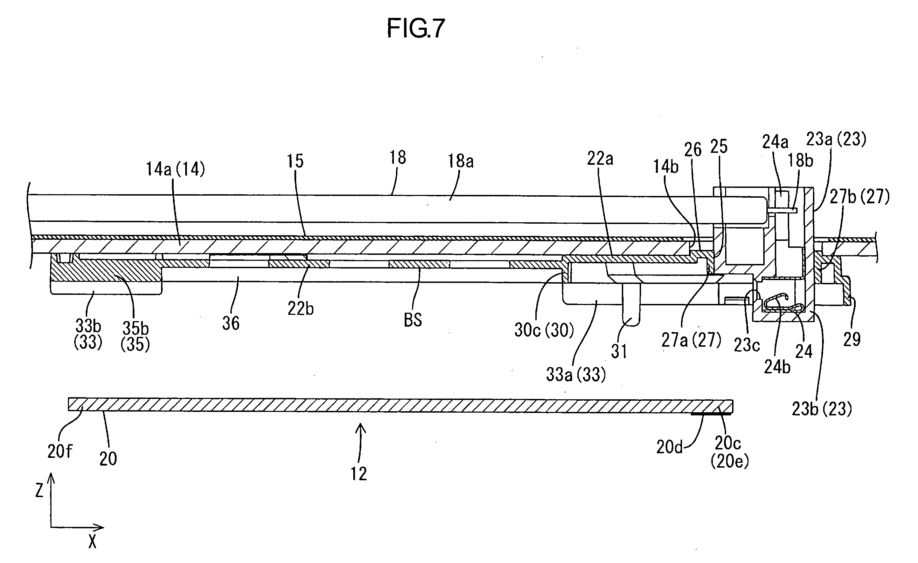

Each inverter board 20 includes a base plate made of synthetic resin (e.g. , a paper phenol or a glass epoxy resin) on which wiring patterns are formed and various electronic components are mounted. Specifically, lead components 20a including power transformers and capacitors are mounted on the rear surface (the surface away from the chassis 14). On the front surface (the surface close to the chassis 14), wiring patterns (not shown) are formed and chip components 20b including resistors, diodes and capacitors are mounted. Lead of the lead components 20a are passed through the inverter board 20 so as to project from the front surface via the through holes and soldered to the wiring patterns. The chip components 20b are surface-mounted on the wiring patterns on the front surface of the inverter board 20. The inverter board 20 is connected to the power source P of the liquid crystal display device 10. It is configured to step up an input voltage from the power source P and to output a voltage higher than the input voltage. The output voltage is applied to each cold cathode tube 18. The inverter board 20 controls on-and-off of the cold cathode tubes 18. In FIGS 7 to 23, the lead components 20a and the chip components 20b are not shown.

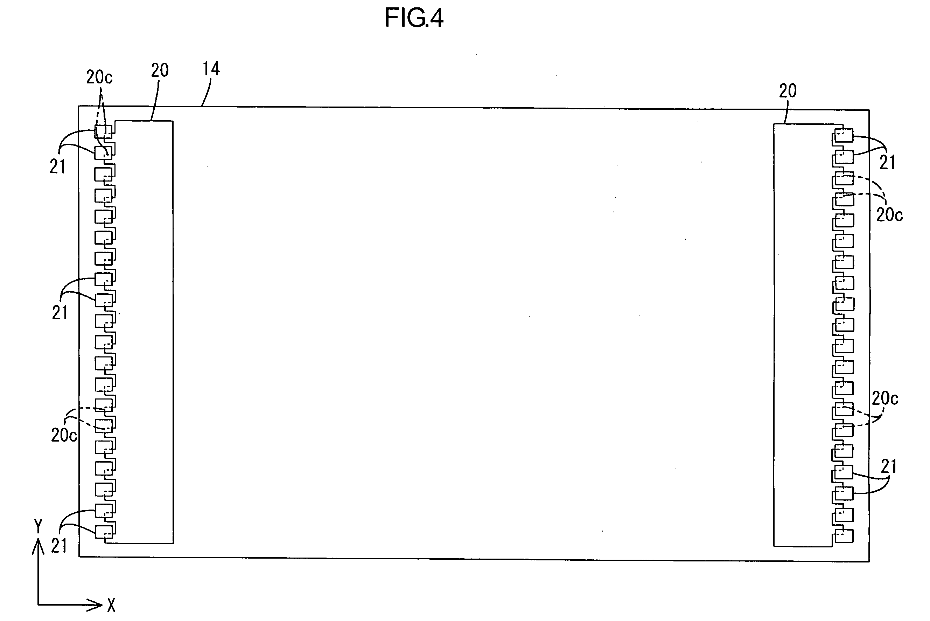

As illustrated in FIG. 4, the inverter boards 20 are mounted on the rear surface of the bottom plate 14a of the chassis 14 (the surface away from the cold cathode tubes 18). The inverter boards 20 are arranged at the respective ends of the long dimension of the bottom plate 14a so as to be symmetric. Each inverter board 20 has a rectangular plan-view shape. The inverter board 20 is placed with the board surface thereof substantially parallel to the board surface of the bottom plate 14a of the chassis 14 (the surface on the X-Y plane and perpendicular to the Z-axis that corresponds to the thickness direction of the liquid crystal display device 10) and with the long-side direction thereof aligned with the short-side direction of the bottom plate 14a (the Y-axis direction, a direction perpendicular to the axial direction of the cold cathode tube 18). The inverter boards 20 are fixed to the bottom plate 14 with screws.

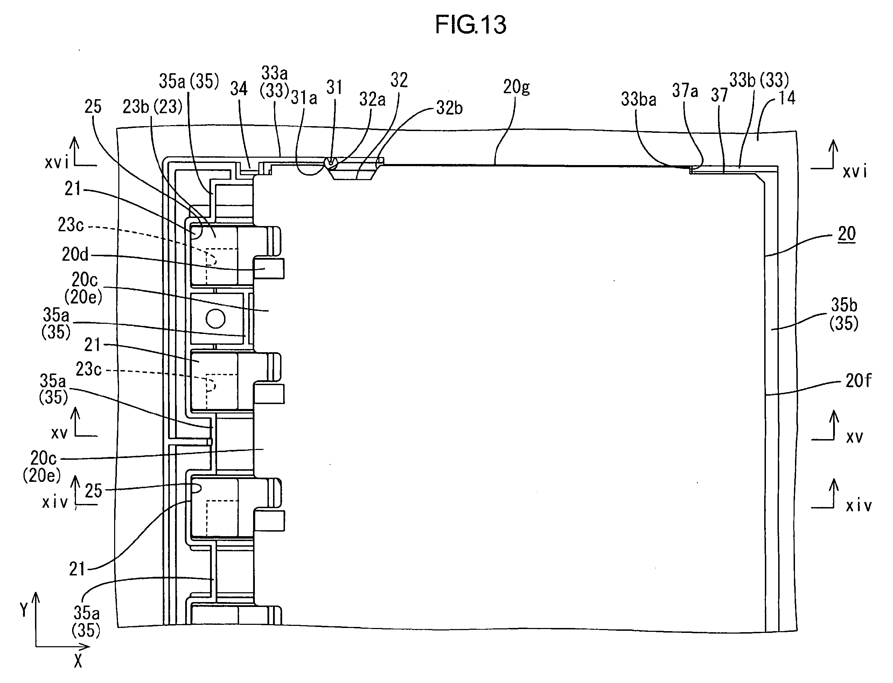

Each inverter board 20 has connector connecting portions 20c at a front end with respect to the connecting direction of the inverter board 20 to the relay connector 21. The connector connecting portions 20c are inserted in the relay connectors 21 and connected thereto. A plurality of the connector connecting portions 20c are provided along the long side of the inverter board 20 (one for each relay connector 21) by cutting out some parts of the front end of the inverter board 20. Namely, the front end of the inverter board 20 is formed in a comb-like shape. As illustrated in FIG. 13, each connector connecting portion 20c is inserted in the corresponding relay connector 21. Terminals 20d extending from the wiring pattern are provided at distal ends of the respective connector connecting portion 20c. A width of each connector connecting portion 20c is larger than that of an opening of a board holding hole 23c of each relay connector 21, which will be explained later. A difference between them is substantially equal to a distance between the adjacent relay connectors 21.

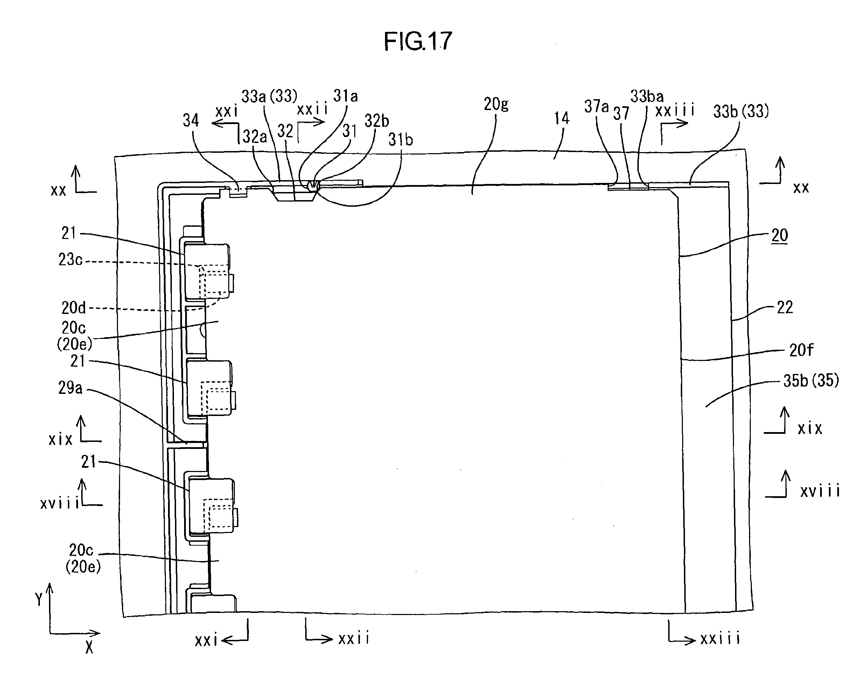

The inverter board 20 and the bottom plate 14a of the chassis 14 (or the cover 22) are arranged so as to face each other with a predetermined gap therebetween. The inverter board 20 can be moved between a non-connected position (see FIGS. 13 to 16) and a connected position (see FIGS. 17 to 23) in the X-axis direction (a first direction, a short-side direction of the inverter board 20) along the board surface of the inverter board 20. At the non-connected position, the connector connecting portions 20c are removed from the relay connectors 21 and the inverter board 20 is held a predetermined distance away from the bottom plate 14a of the chassis 14 so as to face the bottom plate 14a. At the connected position, the connector connecting portions 20c are inserted in the relay connectors 21 and the inverter board 20 is held the predetermined distance away from the bottom plate 14a in the same manner as the non-connected position. Specifically, as illustrated in FIGS. 13 to 16, the connector connecting portions 20c are positioned a predetermined distance from the relay connectors 21 in the X-axis direction and not in contact with terminals 24 of the relay connectors 21 at the non-connected position. As illustrated in FIGS. 17 to 23, the connector connecting portions 20c are inserted in the relay connectors 21 and the terminals 20d are in contact with the terminals 24 of the relay connectors 21 at the connected position. The inverter board 20 can be moved between the non-connected position and the connected position in a substantially horizontal direction along the X-axis direction. A direction from the non-connected position to the connected position is referred to as a connecting direction, and a direction from the connected position to the removal position is referred to as a removal direction (a pull-out direction). A direction toward the right in the X-axis direction in FIGS. 7-9, 14-16, and 18-20 corresponds to the connecting direction, and a direction toward the left in the X-axis direction in those drawings corresponds to the removal direction. In the following descriptions about the connecting direction and the removal direction of each inverter board 20 to or from the relay connectors 21, the left inverter board 20 and the left relay connectors 21 in FIG. 4 are referred. In descriptions before or after the descriptions, the right side and the left side in the X-axis direction in FIGS. 7-9, 14-16, and 18-20 are referred to as the front and the rear, respectively.

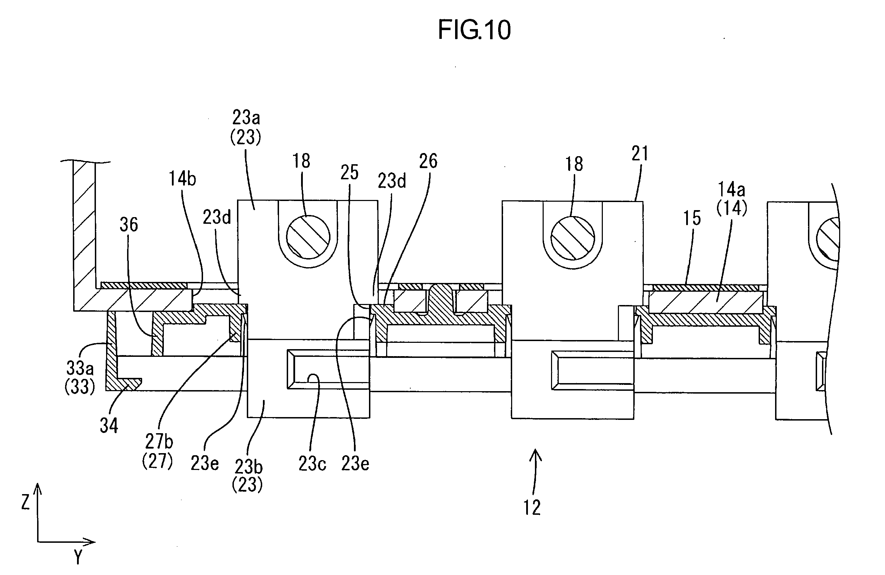

Next, the relay connectors 21 will be explained. As illustrated in FIG. 7, each relay connector 21 includes a housing 23 and the terminal 24. The housing 23 is made of synthetic resin having insulation properties and an overall shape thereof is a block-like shape. The terminal 24 is housed in the housing 23. Each relay connector 21 is passed through the bottom plate 14a of the chassis 14 and a cover 22, which will be explained later, and mounted. A part of the housing 23 inside the chassis 14 is a light source holding portion 23a that holds the end of the cold cathode tube 18. A part of the housing 23 outside the chassis 14 is a board holding portion 23b that holds the connector connecting portion 20c of the inverter board 20. The light source holding portion 23a has a round groove corresponding to a shape of the end of the cold cathode tube 18 (see FIG. 10). The board holding portion 23b has the board holding hole 23c that extends along the X-axis direction and the Y-axis direction. The board holding hole 23c opens to the rear (toward the inverter board 20) and to the right in FIG. 10. As illustrated in FIG. 10, the housing 23 is directly held by the cover 22 mounted to the chassis 14. Specifically, the light source holding portion 23a has a larger Y-axis dimension than that of the board holding portion 23b, and a wide portion 23d is held against the cover 22 from the front. The board holding portion 23b includes stoppers 23e that are held against the cover 22 from the rear.

As illustrated in FIG. 7, ends of the terminals 24 in the light source holding portions 23a are light source contact portions 24a that are in contact with the outer leads 18b of the cold cathode tubes 18. Ends of the terminals 24 in the board holding portions 23b are board contact portions 24b that are in contact with the terminals 20d of the connector connecting portions 20c. Each light source contact portion 24a and each board contact portion 24b have resilience and thus are elastically in contact with the outer lead 18b and the terminal 20d, respectively. An output voltage of the inverter board 20 is applied to the outer leads 18b and the electrodes of the cold cathode tubes 18 via the relay connectors 21.

As illustrated in FIG. 4, the relay connectors 21 are arranged in parts of the chassis 14 corresponding to the ends of the cold cathode tubes 18. Namely, they are arranged ends of the long dimension of the bottom plate 14a in pairs. Moreover, a plurality of them (corresponding to the number of the cold cathode tubes 18) are arranged along the short sides of the bottom plate 14a (along the Y-axis direction, an arrangement direction in which the cold cathode tubes 18 are arranged). Arrangement intervals of the relay connectors 21 are substantially equal to arrangement intervals of the cold cathode tubes 18. The Y-axis positions of the relay connectors 21 are substantially aligned with those of the cold cathode tubes 18.

Next, the covers 22 will be explained. Each cover 22 is made of synthetic resin having insulation properties. As illustrated in FIG. 2, the cover 22 is placed between the bottom plate 14a of the chassis 14 and the inverter board 20 (i.e., sandwiched therebetween). It protects the wiring patterns and the chip components 20b on the inverter board 20 from directly touching the bottom plate 14a. The covers 22 are mounted to the rear surface of the bottom plate 14a of the chassis 14 (the surface away from the cold cathode tubes 18) at the ends of the long dimension of the bottom plate 14a in pairs. They cover the areas of the bottom plate 14a in which the relay connectors 21 are arranged.

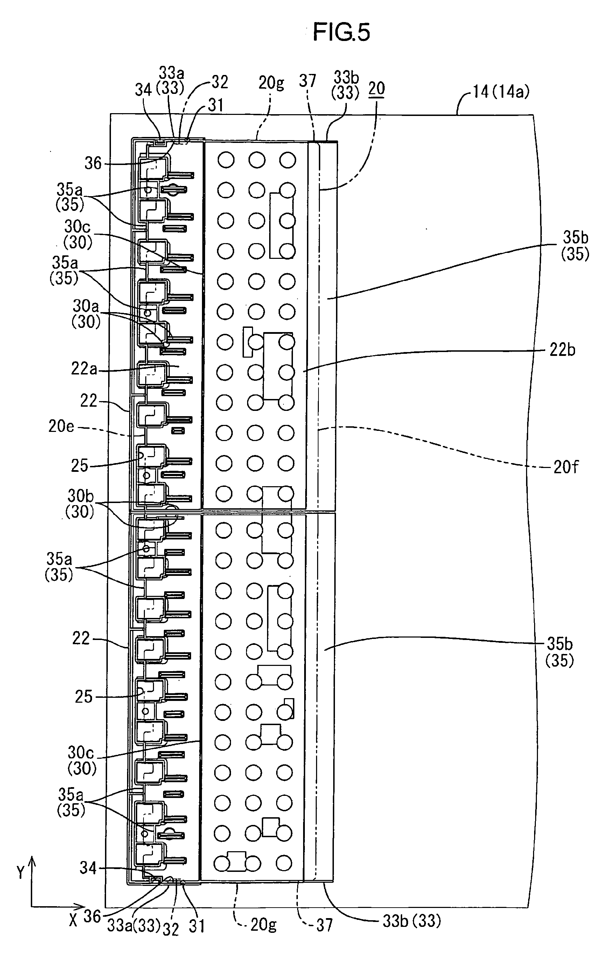

Specifically, as illustrated in FIG. 5, each cover 22 has a rectangular plan-view shape. The covers 22 are arranged along the Y-axis direction and parallel to each other. The long-side direction thereof is aligned with the short-side direction of the bottom plate 14a. The covers 22 are fixed to the respective ends of the long dimension of the bottom plate 14a with screws. The long dimension of each cover 22 is about a half of the short dimension of the chassis 14 or the long dimension of the inverter board 20. The cover 22 has a plate-like shape and the board surface thereof is parallel to the bottom plate 14a of the chassis 14 and the board surface of the inverter board 20. A part of each cover 22 relatively close to the relay connectors 21 (or the end of the chassis 14) is a front portion 22a, and a part of each cover 22 relatively away from the relay connectors 21 (or close to the middle of the chassis 14) is a rear portion 22b. The rear portion 22b has heat dissipation holes that are through holes for dissipating heat and arranged in a matrix.

The front portion 22a of each cover 22 overlaps the area of the chassis 14, in which the relay connectors 21 are arranged, in plan view. The front portion 22a of the cover 22 has connector holes 25 that are through holes for receiving the relay connectors 21. Specifically, a plurality of the connector holes 25 are formed in the front portion 22a along the Y-axis direction so as to parallel to each other. Each connector hole 25 is formed so as to continue to the corresponding connector insertion hole 14b of the chassis 14. As illustrated in FIGS. 7 and 10, each connector hole 25 has a plan-view size, that is, X-axis size and Y-axis size smaller than those of the connector insertion hole 14b. The plan-view size of each connector hole 25 is substantially equal to an overall size of the relay connector 21. When the relay connector 21 is passed through the connector insertion hole 14b and the connector hole 25 and mounted, edges of the connector hole 25 are sandwiched between the wide portions 23d of the light source holding portions 23a and the stoppers 23e. Namely, the relay connector 21 is directly fixed to the cover 22 and indirectly fixed to the chassis 14. Clearances in predetermined X-axis size and Y-axis size are provided between the relay connector 21 and edges of the connector insertion hole 14b of the bottom plate 14a of the chassis 14. A holding protrusion 26 is provided at the edges of each connector hole 25 of the cover 22. The holding protrusion 26 projects toward the front (toward the chassis 14) such that it is fitted in the connector insertion hole 14b. The holding protrusion 26 has a short tubular shape and closes the clearances (it is provided between the edges of the connector insertion hole 14b and the relay connector 21). The holding protrusion 26 separates the relay connector 21 from the edges of the connector insertion hole 14b to maintain proper isolation therebetween.

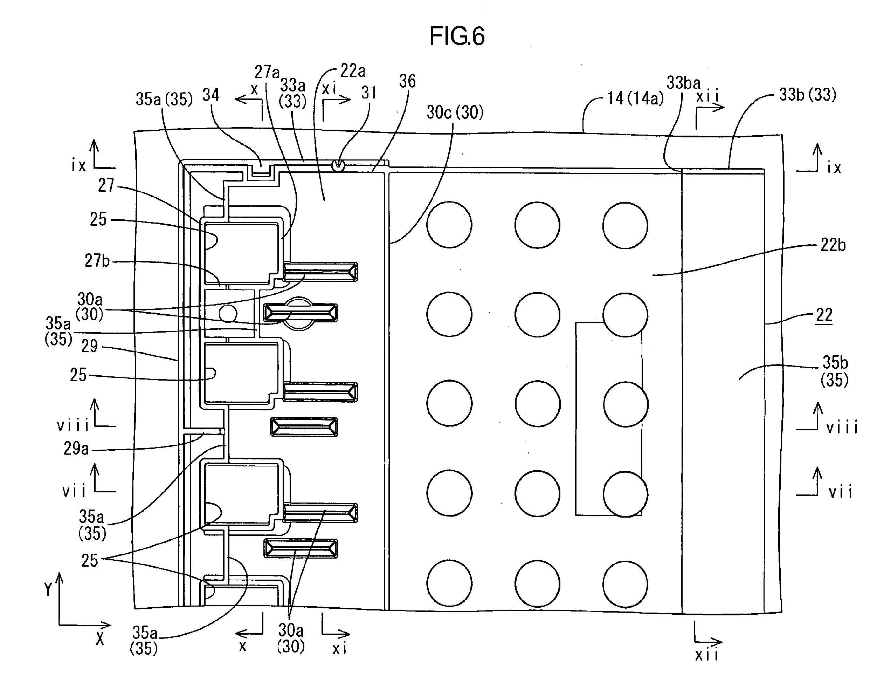

As illustrated in FIG. 6, ribs 27 project from edges of the connector holes 25 in the front portion 22a of the cover 22 toward the rear (toward the inverter board 20). As illustrated in FIG. 7, each rib 27 has a short tubular shape with different heights in the front portion and the rear portion. The rear portion is a low portion 27a, the height of which is relatively low. The front portion is a high portion 27b, the height of which is relatively high. The height of the high portion 27b is defined such that a distal end surface thereof reaches the front surface of the inverter board 20 (the surface opposite the cover 22). A front wall portion 29 projects from the front end portion of the front portion 22a of the cover 22 toward the rear and a distal end thereof is located higher than the high portion 27b of the rib 27. The front wall portion 29 extends along the Y-axis direction and a plurality of extending portions 29a that extend from a middle of the front wall portion 29 to the rear.

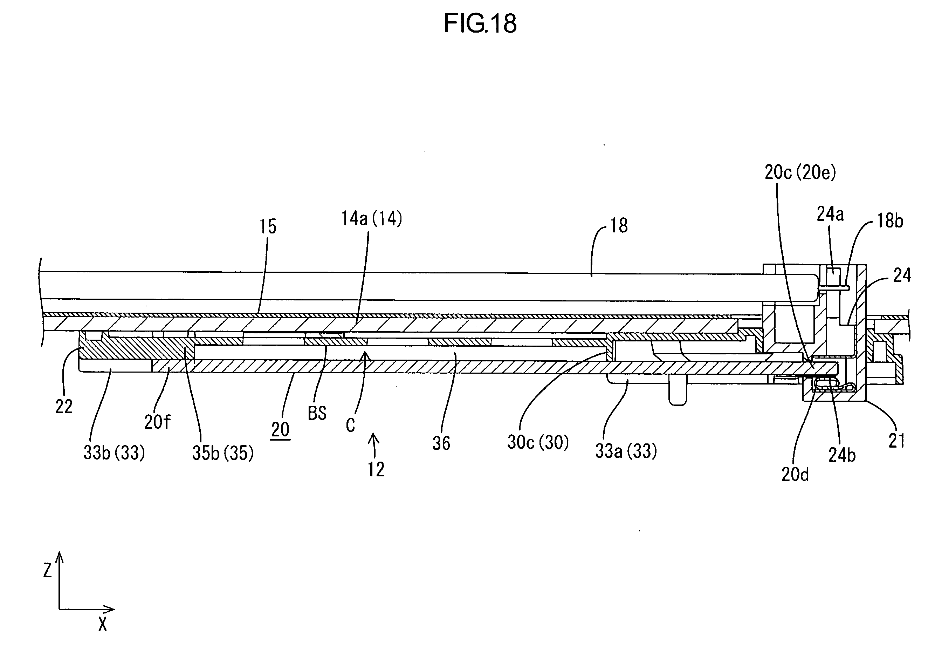

In this embodiment, as illustrated in FIG. 18, each cover 22 and the corresponding inverter board 20 at the connected position face each other with a predetermined amount of clearance C therebetween. Blocking structures are provided for blocking the clearance C. The blocking structures include blocking portions 35 and 36. Each blocking portion 35 or 36 projects from a surface of the cover 22 on a reference plane BS toward the corresponding end portion 20e, 20f or 20g of the inverter board 20 that is arranged on the rear side. Each blocking portion 35 or 36 extends from one end of the end portion 20e, 20f or 20g to the other side with respect to the extending direction of the end portion 20e, 20f of 20g. Specifically, the blocking portions 35 are first blocking portions 35 and the blocking portions 36 are second blocking portions 36. As illustrated in FIG. 5, each first blocking portion 35 projects toward the end portion of the inverter board 20 with respect to the first direction (the X-axis direction) along a connecting direction in which the inverter board 20 is connected to the relay connectors 21. Each second blocking portion 36 projects toward the end portion of the inverter board 20 with respect to the second direction (the Y-axis direction) along the board surface of the inverter board 20 and perpendicular to the first direction. The blocking portions 35 and 36 of this embodiment have heights similar to those of the high portions 27b of the ribs 27. The blocking portions 35 and 36 are in contact with the front surfaces of the end portions 20e to 20g of the inverter board 20. Therefore, the clearance C between the inverter board 20 and the cover 22 is closed. Furthermore, the inverter board 20 is supported by the blocking portions 35 and 36 and thus deformation of the inverter board 20 such as a warp can be reduced (see FIGS. 18 to 20 and 23). In this embodiment, the "reference plane" corresponds to the rear surface of the rear portion 22b of each cover 22 (the surface that faces the inverter board 20 with the clearance C therebetween).

As illustrated in FIG. 6, each first blocking portion 35 includes a front blocking portion 35a and a rear blocking portion 35b. The front blocking portion 35a projects toward the front end portion 20e of the inverter board 20 with respect to the connecting direction. The rear blocking portion 35b projects toward the rear end portion 20f of the inverter board 20 with respect to the connecting direction. The front blocking portion 35a of the first blocking portion 35 is arranged in an area of the front end portion 22a of the cover 22 close to the connector hole 25 that is adjacently located thereto in the Y-axis direction. Specifically, the front blocking portion 35a is arranged in an area between the connector holes 25 adjacent to each other in the Y-axis direction. The front blocking portions 35a are also arranged in areas between the connector holes 25 the closest to the respective ends with respect to the Y-axis direction and the second blocking portions 36, which will be explained later, or the vertical support wall 30b. Each front blocking portion 35a extends in the direction in which the front end portion 20e of the inverter board 20 extends, that is, in the Y-axis direction. The front blocking portion 35a arranged in the area between the connector holes 25 extends continuously for an entire length of the area. It is connected to the ribs 27 formed at the edges of the connector holes 25. The front blocking portion 35a arranged between the connector hole 25 the closest to the end and the second blocking portion 36 or the vertical support wall 30b extends continuously for an entire length of the area. It is connected to the rib 27 formed at the edge of the connector hole 25 the closest to the end and to the second blocking portion 36 or the vertical support wall 30b.

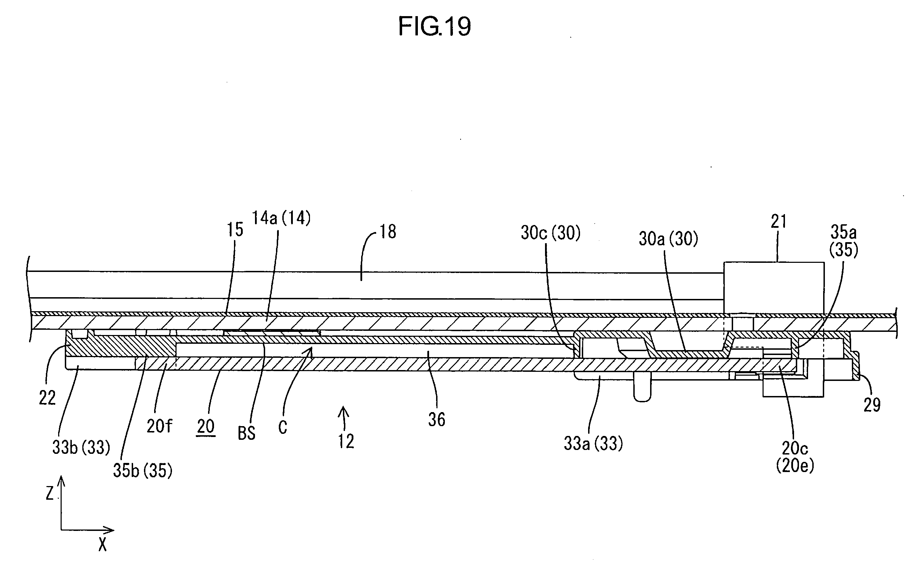

As illustrated in FIG. 19, the front blocking portion 35a projects from the surface of the cover 22 on the reference plane BS to the rear side along the Z-axis direction. Furthermore, the front blocking portion 35a has the height substantially equal to that of the high portion 27b of the rib 27. Therefore, the distal end surface of the front blocking portion 35a is in contact with the front surface of the connector connecting portion 20c (the front end portion 20e) of the inverter board 20 that is set at the connected position, that is, substantially in line contact with the front surface of the connector connecting portion 20c along the Y-axis direction. The relay connectors 21 are fitted in the connector holes 25 and the board holding portion 23b is in contact with the inverter board 20. The front blocking portions 35a and the relay connectors 21 are in contact with the front end portion 20e of the inverter board 20 that is at the connected position. They are in contact with the front end portion 20e for an entire length of the front end portion 20e in the direction in which the front end portion 20e extends (the Y-axis direction). Therefore, the front of the clearance C with respect to the X-axis direction located between the inverter board 20 and the cover 22 is almost entirely covered. Namely, the front of the clearance C is continuously blocked. Therefore, foreign substances (including insects and other living substances) which enter the clearance C from the front can be properly blocked. Each front blocking portion 35a is formed in a wall-like shape with thickness substantially equal to that of the ribs 27. The extending portions 29a are connected to the front blocking portions 35a. The rear surfaces of the extending portions 29a are in contact with the front end portion 20e of the inverter board 20 that is at the connected position. The front blocking portions 35a are not in contact with the front end portion 20e of the inverter board 20 that is at the non-connected position (see FIG. 17). As illustrated in FIG. 5, the front blocking portion 35a is not provided between the covers 22 that are mounted to the chassis 14. Therefore, the clearance C partially opens to the front. However, by setting the gab between the covers 22 sufficiently small, the foreign substances can be blocked.

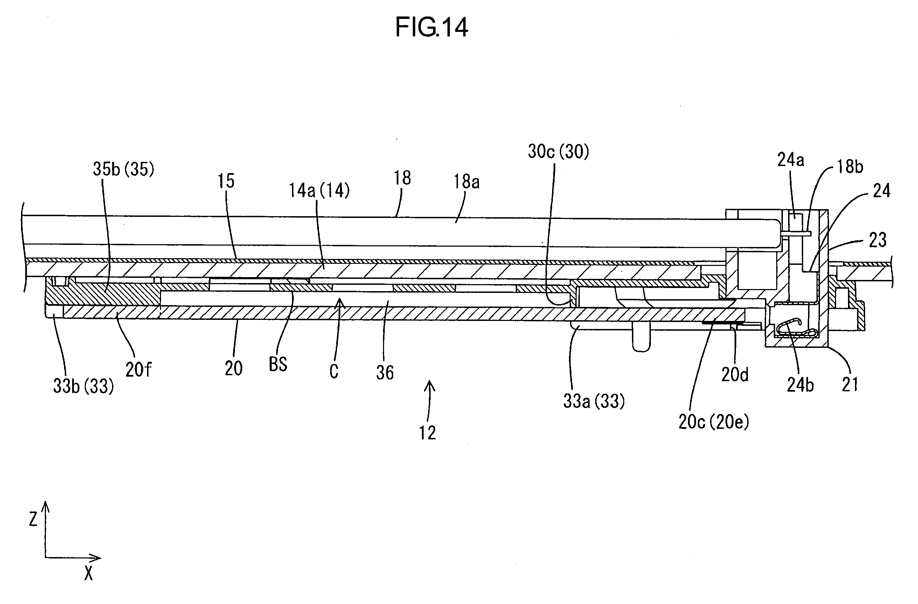

As illustrated in FIGS. 5 to 7 and 12, the rear blocking portions 35b of the first blocking portions 35 are arranged at the rear ends of the rear portions 22b of the covers 22. Each rear blocking portion 35b is prepared by forming a part of the rear portion 22b thick. Specifically, the rear blocking portion 35b is formed in an area of the rear portion 22b with a predetermined length along the X-axis direction on the rear end side and with the entire length along the Y-axis direction. The rear blocking portion 35b projects from the reference plane BS to the rear along the Z-axis direction in a step-like form. It has a block-like overall shape. Namely, the rear blocking portion 35b extends in the direction in which the rear end portion 20f of the inverter board 20 (the Y-axis direction) along the entire length of the rear end portion 20f. The rear blocking portion 35b has the thickness substantially equal to those of the front blocking portion 35a and the high portion 27b of the rib 27. Therefore, the rear blocking portion 35b is in line contact with the rear end portion 20f of the inverter board 20 for the entire length of the rear end portion 20f in the direction in which the rear end portion 20f extends. The rear blocking portion 35b has an X-axis dimension larger than a moving range of the inverter board 20 between the non-connected position and the connected position. Therefore, the rear blocking portion 35b is in line contact with the rear end portion 20f for the entire length of the rear end portion 20f in the direction in which the rear end portion 20f extends. The rear blocking portion 35b is in line contact with the rear end portion 20f whether the inverter board 20 is at the non-connected position or at the connected position (see FIGS. 14 and 18). A contact range (a contact area) between the rear blocking portion 35b and the inverter board 20 at the non-connected position is larger than a contact range (a contact area) between the rear blocking portion 35b and the inverter board 20 at the connected position by the moving range of the inverter board 20. As described above, the rear of the clearance C between the inverter board 20 and the cover 22 with respect to the X-axis direction is covered without any openings. Namely, the rear of the clearance C is continuously blocked. Therefore, foreign substances that enter the clearance C from the rear are properly blocked.

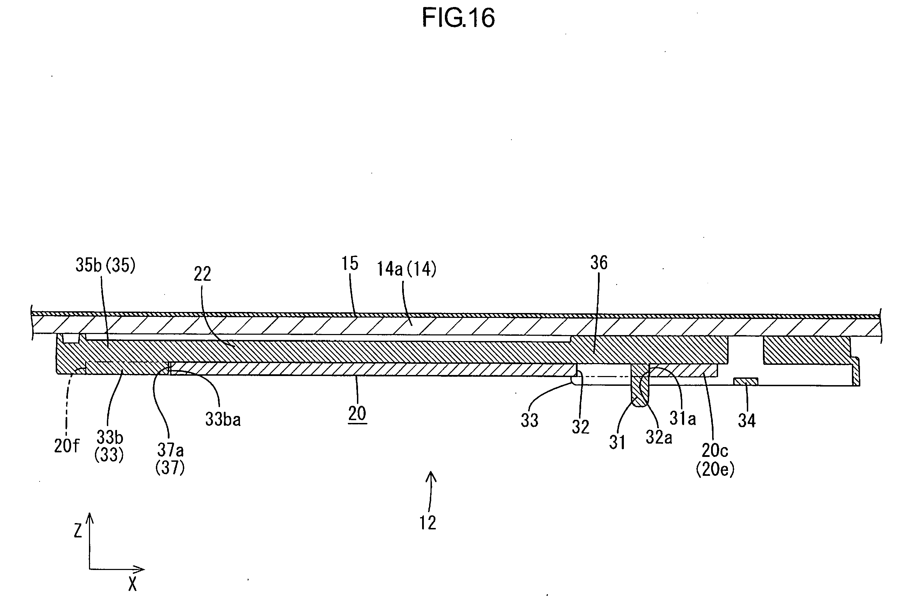

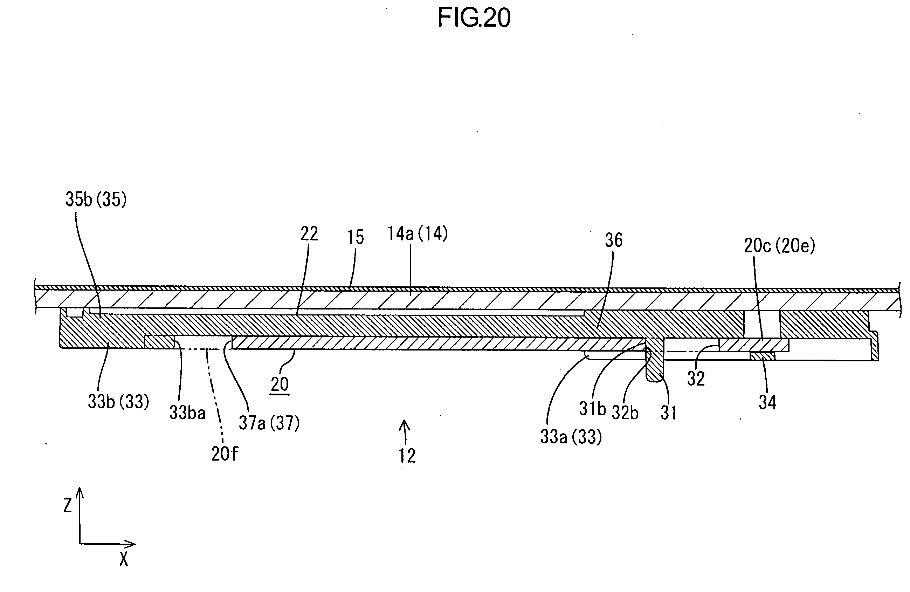

As illustrated in FIGS. 5, 6 and 9, the second blocking portions 36 are provided one for each cover 22 mounted to the chassis 14 so as to project toward the respective end-portions 20g located at the ends of the long dimensions (along the Y-axis direction, the second direction) of the inverter boards 20. Specifically, the second blocking portions 36 are arranged on the end portions of the respective covers 22 near the end of the short dimension of the chassis 14. Each second blocking portion 36 projects from the surface of the cover 22 on the reference plane BS toward the rear and extends along the Z-axis direction. The second blocking portion 36 extends for about the entire length of the cover 20 along the X-axis direction except for the area in which the rear blocking portion 35b is provided. Each second blocking portion 36 extends for about the entire length of the end portion 20g at the end of the long dimension of the inverter board 20 except for the rear end portion of the end with respect to the direction in which the end extends (the X-axis direction). Each second blocking portion 36 projects from the surface of the cover 22 on the reference plane BS toward the rear along the Z-axis direction. It has the height substantially equal to that of the first blocking portion 35. Therefore, the second blocking portion 36 is in contact with about the entire area of the end of the long dimension of the inverter board 20 except for the rear end portion. Namely, the second blocking portion 36 is in line contact with the end portion 20g along the X-axis direction. The second blocking portions 36 are in contact with the respective end portion 20g of the inverter board 20 whether the inverter board 20 is at the non-connected position or the connected position (see FIGS. 16 and 20). The sides of the clearance C with respect to the Y-axis direction are covered without any openings and thus the clearance C is continuously blocked. Therefore, foreign substances that enter the clearance C from the sides can be properly blocked.

In this embodiment, the first blocking portions 35 and the second blocking portions 36 are connected to one another. As described earlier, the front blocking portions 35a are connected to the front end portions of the second blocking portions 36. Moreover, the rear blocking portions 35b are connected to the rear end portions of the second blocking portions 36. Therefore, the first blocking portions 35 and the second blocking portions 36 form a loop. Namely, the clearance C between the inverter board 20 and the cover 22 is substantially surrounded by the first blocking portions 35 and the second blocking portions 36 that form the loop. Therefore, foreign substances that enter the clearance C from all directions along the board surface of the inverter board 20 can be properly blocked.

As illustrated in FIG. 5, each cover 22 has a plurality of board support portions 30 that project toward the front and support the inverter board 20 from the rear to restrict the inverter board 20 from being deformed, for example, warped. The board support portions 30 include a plurality of support projections 30a, a vertical support wall 30b, and a horizontal support wall 30c. The support projections 30a are arranged adjacent to the respective connector holes 25 in the front portion 22a of the cover 22. The vertical support wall 30b is arranged at the ends of the long dimension (along the Y-axis direction) of the cover 22. The horizontal support wall 30d is connected between the vertical support wall 30b and the second blocking portion. The support projections 30a, the vertical support wall 30b, and the horizontal support wall 30c have heights similar to those of the blocking portions 35 and 36. Therefore, they are in contact,with the front surface of the inverter board 20.

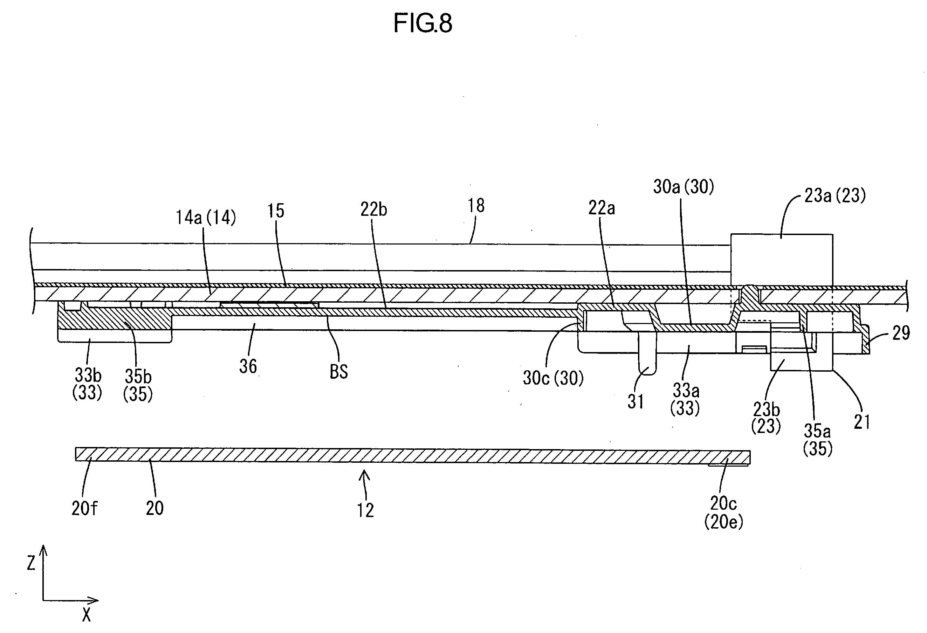

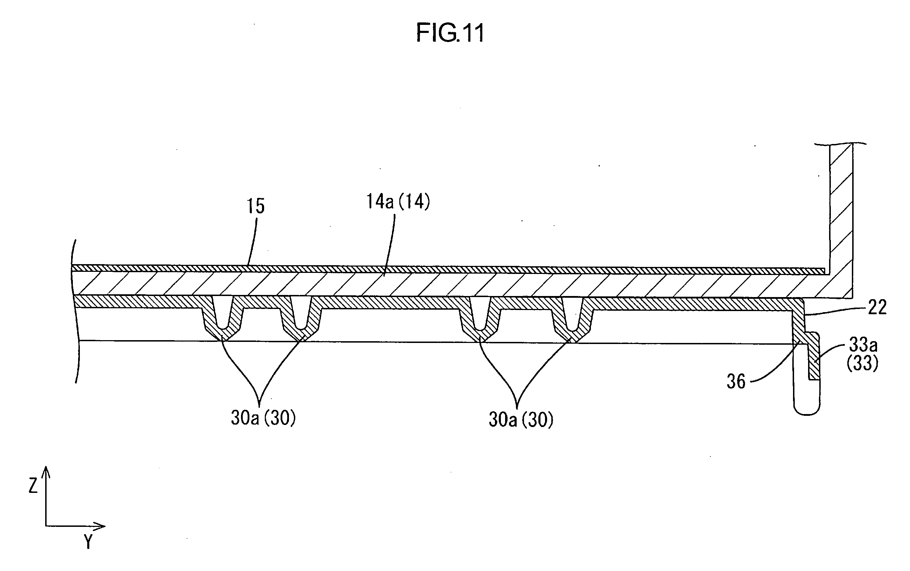

As illustrated in FIGS. 6 and 8, each support projection 30a extends along the X-axis direction (the connecting direction). A plurality of the support projections 30a are arranged along the Y-axis direction so as to be parallel to each other. For most of the connector holes 25, two support projections 30a are provided for each connector hole 25. Some of the support projections 30a are connected to the low portions 27a of the ribs 27. As illustrated in FIGS. 8 and 11, each support projection 30a is formed by projecting a part of the front portion 22a of the cover 22 to the front. The outer surfaces of the support projection 30a are tapered surfaces that are tapered at two different angles. The support projection 30a supports a part of the inverter board 20 immediately rear of the connector connecting portion 20c that is inserted in the relay connector 21 (see FIG. 19).

As illustrated in FIG. 5, each cover 22 is mounted to the chassis 14, and the vertical support wall 30b is located at the end of each cover 22 close to the center of the short dimension of the chassis 14. The vertical support wall 30b extends along the X-axis direction similar to the second blocking portion 36. The front blocking portion 35a is connected to a front end portion of the vertical support wall 30b. The horizontal support wall 30c extends along the Y-axis direction. It is arranged more to the rear than the support projection 30a and supports the inverter board 20 at that point from the front. The board support portions 30 are arranged so as to support the inverter board 20 whether the inverter board 20 is at the non-connected position or at the connected position. Moreover, the board support portions 30 support the inverter board 20 while the inverter board 20 is moved between those positions.

As described above, the inverter board 20 is moved from the non-connected position to the connected position while the Z-axis position thereof relative to the chassis 14 and the cover 22 is maintained. Then, the inverter board 20 is connected to the relay connectors 21. On the surface of the inverter board 20 opposed to the chassis 14 and the cover 22, the chip components 20b are mounted. Moreover, the leads of the lead components 20a project from the surface. During setting of the inverter board 20 to the non-connected position, the inverter board 20 may be displaced from proper X-axis position and Y-axis position relative to the chassis 14 and the cover 22. If the displacement occurs, the chip components 20b and the leads may hit parts of the chassis 14 or the cover 22. Furthermore, if the inverter board 20 is displaced from the proper non-connected position, the same problem may occur when it is moved from the displaced position to the connected position.

In this embodiment, the cover 22 and the inverter board 20 mounted to the chassis 14 have positioning structures for positioning the cover 22 and the inverter board 20 relative to each other along the board surface directions thereof (the X-axis direction and the Y-axis direction). Two kinds of the positioning structures are provided for different directions in which the inverter board 20 is positioned. The positioning structures for positioning the inverter board 20 in the X-axis direction (the first direction) along the connecting direction of the inverter board 20 are the first positioning structures. The positioning structures for positioning the inverter board 20 in the Y-axis direction (the second direction) perpendicular to the X-axis direction are the second positioning structures. The first positioning structures and the second positioning structures are provided at the ends of the Y-axis dimensions of the chassis 14 and the inverter board 20.

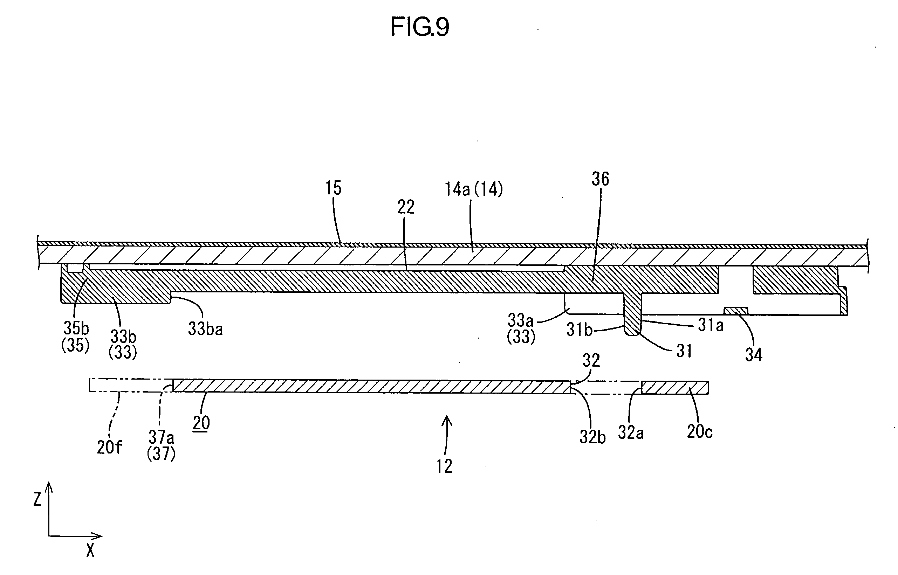

As illustrated in FIGS. 5 and 9, the first positioning structures include the first positioning protrusions 31 and the first positioning recesses 32. The first positioning protrusions 31 are provided on the cover 22 that is located on the chassis 14 side. The first positioning recesses 32 are provided in the inverter board 20 for receiving the first positioning protrusions 31. The first positioning protrusions 31 project from the second blocking portions 36 of the cover 22 toward the rear (toward the inverter board 20). Two pairs of first positioning protrusions 31 and a total of four first positioning protrusions 31 are provided. The first positioning protrusions 31 in each pair are arranged at the respective ends of the short dimension of the chassis 14 (along the Y-axis direction). As illustrated in FIGS. 6 and 9, the first positioning protrusions 31 are located more to the rear than the connector holes 25. Each first positioning protrusion 31 has a columnar shape and the height larger than the thickness of the inverter board 20. As illustrated in FIG. 13, the first positioning recesses 32 are formed by cutting parts of the short edges (at the ends of the Y-axis dimension) of the inverter board 20. Namely, each first positioning recess 32 is formed by cutting the parts of the short edges of the inverter board 20 located at slightly more to the rear than the front edge of the inverter board 20. Each first positioning recess 32 extends through the inverter board 20 in the thickness direction and opens outward. Each first positioning recess 32 is in a trapezoidal plan-view shape and the width thereof (the X-axis dimension) increases toward the opening-end corresponding to the outer edge of the Y-axis dimension. A front edge 32a and a rear edge 32b of each first positioning recess 32 are tapered.

Furthermore, each first positioning recess 32 has the X-axis dimension larger than the diameter of the first positioning protrusion 31. When the first positioning protrusion 31 is inserted in the first positioning recess 32, clearances are provided between the first position protrusions 31 and the edges of the first positioning recess 32 with respect to the X-axis direction. The first positioning protrusion 31 can be moved relative to the first positioning recess 32 in the front-rear direction within a range corresponding to the clearances. The first positioning protrusion 31 hits the front edge 32a or the rear edge 32b of the first positioning recess 32 and thus the relative movement of the first positioning protrusion 31 is restricted. When the inverter board 20 is at the non-connected position, the front end portions 31a of the first positioning protrusions 31 are in contact with the front edges 32a of the respective first positioning recesses 32 as illustrated in FIG. 13. Therefore, the inverter board 20 does not move from the non-connected position to the rear. When the inverter board 20 is at the connected position, the rear end portion 31b of the first positioning protrusions 31 are in contact with the rear edges of the respective first positioning recesses 32 as illustrated in FIG. 17. Therefore, the inverter board 20 does not move from the connected position to the front. The clearance between each first positioning protrusion 31 and the edge of the corresponding first positioning recess 32 is substantially equal to the distance between the non-connected position and the connected position of the inverter board 20.

Next, the second positioning structures will be explained in detail. The second positioning structures include the second positioning parts 33. As illustrated in FIGS. 5 and 9, the second positioning parts 33 are arranged at in end portions of each cover 20 near the ends of the short dimension of the chassis 14. Two pairs of second positioning parts 33 and a total of four second positioning parts 33 are provided. The second positioning parts 33 in each pair are arranged at the respective ends of the short dimension of the chassis 14 along the Y-axis direction so as to be away from each other in the front-rear direction. As illustrated in FIGS. 6 and 9, each second positioning part 33 includes a front positioning portion 33a and a rear positioning portion 33b. The front positioning portion 33a is located relatively front and connected to the second blocking portion 36 of the cover 22. The rear positioning portion 33b is located relatively rear and connected to the rear blocking portion 35b. The second positioning part 33 is a vertical wall that projects from the outer edges of the second blocking portion 36 and the rear blocking portion 35b toward the rear along the Z-axis direction, and extends along the X-axis direction. The thickness of the second positioning part 33 is about a half of the thickness of the second blocking portion 36.

As illustrated in FIG. 13 and 17, the inner walls of the second positioning parts 33 are in contact with the side surfaces of the inverter board 20 (including the side surface of the cutout 37 that will be explained later). A distance between the inner walls of the second positioning parts 33 opposite to each other and located at the ends of the Y-axis dimension of the chassis 14 is substantially equal to the long dimension of the inverter board 20 as illustrated in FIG. 5. Therefore, the inverter board 20 is not displaced from the non-connected position or the connected position in the Y-axis direction. During the movement of the invert board 20 from the non-connected position to the connected position, the side surfaces of the inverter board 20 slide over the inner walls of the second positioning parts 33. Namely, the movement of the inverter board 20 is guided. The height of each second positioning part 33 is smaller than that of the first positioning protrusion 31.

More specifically, the front positioning part 33a extends for the length substantially equal to the front portion 22a of the cover 22 along at the end of the X-axis dimension. Moreover, the rear positioning part 33b extends for the length substantially equal to the rear blocking portion 35b at the rear end of the X-axis dimension. The front positioning part 33a is connected to the base portion of the first positioning protrusion 31. The front positioning part 33a does not overlap the inverter board 20 in plan view, that is, it is off the inverter board 20 in the Y-axis direction to the side. The rear positioning part 33b is arranged more to the center of the inverter board 20 than the front positioning part 33a along the Y-axis direction. The end portions 20g at the ends of the Y-axis dimension of the inverter board 20 corresponding to the rear positioning parts 33b have the cutouts 37 in parts for receiving the rear positioning parts 33b. Each cutout 37 is provided in the rear end area of the end portion 20g so as to extend through the inverter board 20 in the thickness direction and open toward the outside and the rear. The cutout 27 has the rectangular plan view shape and the front end portion 37 thereof is substantially straight along the Y-axis direction.

Because the cutout 37 opens to the rear, the rear positioning part 33b can be inserted therein when the inverter board 20 is set at the non-connected position as illustrated in FIG. 13. The front end portion 33ba of the rear positioning part 33b is formed so as to correspond to the front end portion 37a of the cutout 37 in the inverter board 20 that is at the non-connected position. The rear positioning part 33b and the cutout 37 together with the first positioning protrusion 31 and the first positioning recess 32 restrict the displacement of the inverter board 20 from the non-connected position to the rear. Namely, the rear positioning part 33b and the cutout 37 that are the second positioning structure also function as the first positioning structure.

Each cover 22 in this embodiment includes board stoppers 34 in addition to the above positioning structures. The board stoppers 34 hold the inverter board 20 from the rear (from a side opposite from the chassis 14). As illustrated in FIGS. 6, 9 and 10, each board stopper 34 projects inward from the second positioning part 33 of the cover 22 along the Y-axis direction (i.e., toward the middle of the short dimension of the chassis 14). The board stopper 34 is arranged near the front end portion of the second positioning part 33, specifically, in an area that overlaps the connector hole 25 in the X-axis direction. The inner surface of the board stopper 34 is in contact with the rear surface of the inverter board 20. The board stopper 34 is not in contact with the inverter board 20 when the inverter board 20 is at the non-connected position (see FIG. 16). It is in contact with front end portion of the inverter board 20 when the inverter board 20 is at the connected position (see FIG. 20). With this configuration, the inverter board 20 at the connected position is less likely to deform in a direction that crosses the board surface of the inverter board 20.

This embodiment has the above configuration. Next, functions of this embodiment will be explained. The liquid crystal panel 11 and the backlight unit 12 prepared separately are fixed together by the bezel 13, and the liquid crystal display device having the above configuration is prepared. Assembly of the backlight unit 12 will be explained.

In the assembly of the backlight unit 12, the reflection sheet 15 is placed over the front inner surface of the chassis 14 and the covers 22 are attached to the rear outer surface of the chassis 14. The relay connectors 21 are mounted to the chassis 14 from the inner side of the chassis 14 and fitted in the connector holes of the covers 22. The relay connectors 21 are held by the covers 22. Then, the cold cathode tubes 18 are installed in the chassis 14. The outer leads 18b at the ends thereof are inserted in the light source holding portions 23a of the relay connectors 21 so as to elastically in contact with the light source contacts 24a of the terminals 24. The holders 19, the optical members 16 and the frame 17 are mounted to the chassis 14 from the front (see FIG. 2).

On the rear surface of the chassis 14, the inverter boards 20 are mounted to the chassis 14 and the covers 22. The inverter boards 20 are moved close to the chassis 14 and the covers 22 from the non-connected positions illustrated in FIGS. 7 to 9 with the surfaces on which the wiring patterns and the chip components 20b are provided on the front side. The inverter boards 20 are moved from the rear side toward the chassis 14 and the covers 22 along the Z-axis direction until they are set at the non-connected positions illustrated in FIGS. 13 to 16. By positioning the first positioning protrusions 31 of each cover 22 to the respective first positioning recesses 32 at the ends of the Y-axis dimension of each inverter board 20, the inverter board 20 is properly set to the connected position with respect to the X-axis (see FIG. 5). The position of inverter board 20 is adjusted with respect to the X-axis direction such that the front end portion 31a of the first positioning protrusions 31 and the front end portion 33ba of the rear positioning portion 33b of the cover 22 on the chassis 14 side are in contact with the respective front edges 32a of the first positioning recesses 32 and a front end wall 37a of each cutout 37 arranged near the four corners of each inverter board 20. As a result, the inverter board 20 is positioned with respect to the X-axis direction at two positions away from each other in the front-rear direction. Therefore, the relative positions between the first positioning protrusions 31 and the first positioning recesses 32 can be easily visually confirmed. Moreover, the relative positions between the rear positioning portions 33b and the cutouts 37 can be also easily visually confirmed.

When the inverter board 20 is moved from the removal position to the non-connected position, the side surfaces of the inverter board 20 are positioned relative to the second positioning parts 33 of the cover 22 as illustrated in FIG. 13. As a result, the inverter board 20 is properly set at the non-connected position with respect to the Y-axis direction. Specifically, the position of the inverter board 20 with respect to the Y-axis direction is adjusted as follows. The side surfaces of the front end portion 20e are in contact with the inner walls of the front positioning portions 33a of the cover 22 on the chassis 14 side. The side surfaces of the rear end portion 20f of the inverter board 20 (including the side surfaces of the cutouts 37) are in contact with the inner walls of the rear positioning parts 33b. As a result, the inverter board 20 is properly set at the non-connected position with respect to the Y-axis direction (see FIG. 5). As illustrated in FIGS. 14 to 16, when the inverter board 20 is set at the non-connected position, the rear blocking portions 35b and the second blocking portions 36 are in contact with the end portions 20e to 20g. The board support portions 30 (the support protrusions 30a, the vertical support walls 30b and the horizontal support walls 30c) are in contact with the parts of the inverter board 20 other than the end portions 20e to 20g. As a result, the Z-axis positional relationship between the chassis 14 and the cover 22 is determined and the deformations such as a warp can be reduced.

The inverter board 20 is two-dimensionally positioned to proper X-axis position and Y-axis position when it is set at the non-connected position. During the movement of the inverter board 20, the chip components 20b and the leads of the lead components 20a project toward the chassis 14 or the cover 22 are less likely to hit parts of the chassis 14 or the cover 22 (e.g., screws for fixing the inverter board 20).

Next, each inverter board 20 is moved from the non-connected position to the connected position. When the inverter board 20 is moved from the non-connected position and pushed to the front along the X-axis direction, the connector connecting portions 20c are inserted in board holding holes 23c of the board holding portions 23b of the relay connectors 21. When the inverter board 20 is moved to the connected position, the board contacts 24b of the terminals 24 of the relay connectors 21 are elastically in contact with the terminals of the connector connecting portions 20c as illustrated in FIGS. 17 and 18. The inverter board 20 is electrically connected to the cold cathode tubes 18 via the relay connectors 21 and power supply to the cold cathode tubes 18 is established.

During the movement of the inverter board 20 from the non-connected position illustrated in FIG. 13 to the connected position illustrated in FIG. 17, the first positioning protrusions 31 inserted in the first positioning recesses 32 move relatively in the X-axis direction within a range corresponding to the clearances. During the movement, the side surfaces of the inverter board 20 slide over the second positioning parts 33. The inverter board 20 moves linearly along the X-axis direction without being tilted during the movement guided by the second positioning parts 33. When the inverter board 20 is set at the connected position, the rear end portions 31b of the first positioning protrusions 31 are in contact with the rear edges 32b of the first positioning recesses 32 as illustrated in FIGS. 17 and 20. Therefore, the inverter board 20 is less likely to be pushed further to the front. During the movement of the inverter board 20 from the non-connected position to the connected position, the inverter board 20 is positioned relative to the X-axis direction and the Y-axis direction. Therefore, the chip components 20b and the leads of the lead components 20a on the inverter board 20 are less likely to touch the parts of the chassis 14 and the cover 22.

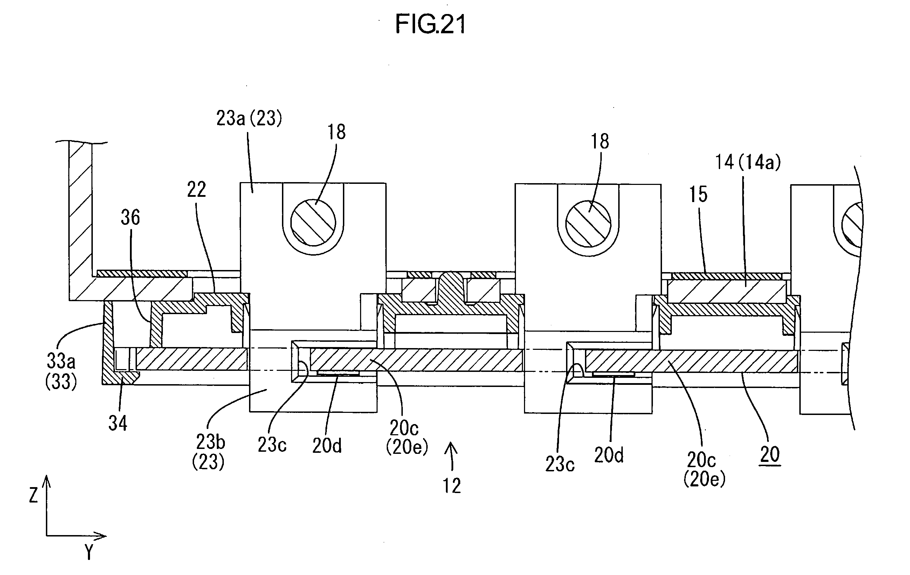

When the inverter board 20 is set at the connected position, the relay connectors 21 and the front blocking portions 35a of the first blocking portions 35 are in contact with the front end portions 20e of the inverter board 20. The rear blocking portions 35b are in contact with the rear end portions 20f. The second blocking portions 36 are in contact with the side end portions 20g. The above contact is illustrated in FIGS. 19 to 20 and 23. The clearance C between the inverter board 20 and the cover 22 is closed by the first blocking portions 35 and the second blocking portions 36. The first blocking portions 35 and the second blocking portions 36 are arranged around the clearance C so as to continuously surround the clearance C. Therefore, foreign substances (including insects and other living substances) which enter the clearance C from all directions along the board surface of the inverter board 20 are properly blocked. Therefore, an adverse effect on the connection between the relay connectors 21 and the inverter board 20 is not caused by the foreign substances. When the inverter board 20 is at the connected position, the front end portions of the side end portions 20g are held by the board stoppers 34 from the rear as illustrated in FIGS. 20 and 21. Furthermore, the board support portions 30 (the support protrusions 30a, the front vertical support walls 30b and 30c, the horizontal support walls 30d) are in contact with the front surface of the inverter board 20 as illustrated in FIGS. 18 to 22. A warp of the inverter board 20 in the Z-axis direction, that is, the direction perpendicular to the board surface thereof, or a backlash of the inverter board 20 is effectively reduced. Therefore, the blocking portions 35 and 36 remain in contact with the inverter board 20. Namely, the function for blocking the foreign substances is properly exerted.

When the inverter board 20 is moved from the removal position to the non-connected position, the inverter board 20 may be set at a position slightly more to the front than the non-connected position. In such a case, the inverter board 20 is still between the non-connected position and the connected position. Therefore, the components of the inverter board 20 are less likely to touch the parts of the chassis 14 or the cover 22.

As described above, the backlight unit 12 in this embodiment includes the cold cathode tubes 18, the chassis 14, the inverter boards 20, and the relay connectors 21. The chassis 14 houses the cold cathode tubes 18. The inverter boards 20 are arranged on the opposite side of the chassis 14 from the cold cathode tubes 18 with a predetermined amount of clearance C from the reference plane BS on the chassis 14 side. The inverter boards 20 are configured to supply drive power to the cold cathode tubes 18. The relay connectors 21 are mounted to the chassis 14 such that the inverter boards 20 are connected to or disconnected from the relay connectors 21 by moving them in the direction along the board surface of the inverter boards 20. The relay connectors 21 are configured to relay power supply from the inverter boards 20 to the cold cathode tubes 18. On the chassis 14 side, the blocking portions 35 and 36 project from the reference plane BS toward the respective end portions 20e to 20g. Each blocking portion 35 or 36 is arranged between one end of the dimension of the end portion 20e, 20f, or 20g along the direction in which the end portion 20e, 20f, or 20g extends to the other end. As a result, the clearance C between each inverter board 20 and the reference plane BS is blocked.

Each inverter board 20 is arranged with the predetermined amount of clearance C from the reference plane BS with respect to the chassis 14. The inverter board 20 is connected to or disconnected from the relay connectors 21 by moving it in the direction along the board surface thereof. The drive power is supplied to the cold cathode tubes 18 via the relay connectors 21. The clearance C provided between the reference plane BS on the chassis 14 side and the inverter board 20 is blocked by the blocking portions 35 and 36. The blocking portions 35 and 36 project from the reference plane BS on the chassis 14 side toward the respective end portions 20e to 20g of the inverter board 20. Each blocking portion 35 or 36 is arranged between one end of the dimension of the end portion 20e, 20f, or 20g along the direction in which the end portion 20e, 20f, or 20g extends to the other end. Therefore, foreign substances are less likely to enter the clearance C.

More preferably, the lighting device of this embodiment has the following configuration.
(1) The blocking portions 35 project toward the respective end portions 20e and 20f at the ends of the dimension of the inverter board 20 along the first direction (the X-axis direction), that is, the connecting direction of the inverter board 20 to the relay connectors 21. With this configuration, foreign substances are less likely to enter the clearance C from the first direction along the connecting direction of the inverter board 20.

(2) The blocking portions 35 include the rear blocking portion 35b that projects toward the rear end portion 20f of the inverter board 20 at the end of the dimension of the inverter board 20 along the connecting direction of the inverter board 20 to the relay connectors 21. With this configuration, foreign substances are less likely to enter the clearance C from the rear in the connecting direction of the inverter board 20.

(3) The blocking portions 35 include the front blocking portions 35a that project toward the front end portion 20e of the inverter board 20 at the end of the dimension of the inverter board 20 along the connecting direction of the inverter board 20 to the relay connectors 21. With this configuration, foreign substances are less likely to enter the clearance C from the front in the connecting direction of the inverter board 20.

(4) The blocking portions 35 include the rear blocking portion 35b and the front blocking portions 35a. The rear blocking portion 35b projects toward the rear end portion 20f of the inverter board 20 at the end of the dimension of the inverter board 20 along the connecting direction of the inverter board 20 to the relay connectors 21. The front blocking portions 35a project toward the front end portion 20e of the inverter board 20 at the end of the dimension of the inverter board 20 along the connecting direction of the inverter board 20 into the relay connectors 21. With this configuration, foreign substances are less likely to enter the clearance C from the rear and the front in the connecting direction of the inverter board 20.

(5) The blocking portions 35 and 36 include the first blocking portions 35 and the second blocking portion 36. The first blocking portions 35 project toward the respective end portions 20e and 20f at the end of the dimension of the inverter board 20 along the first direction, that is, the connecting direction thereof into the relay connectors 21. The second blocking portion 36 extends along the board surface of the inverter board 20. The second blocking portion 36 projects toward the end portion 20g at the end of the dimension of the inverter board 20 along the second direction (the Y-axis direction) perpendicular to the first direction. The first blocking portions 35 and the second blocking portion 36 are connected to one another. With this configuration, foreign substances are less likely to enter the clearance C from the first direction and the second direction that is perpendicular to the first direction.

(6) The blocking portions 35 and 36 include a pair of the first blocking portions 35 and a pair of the second blocking portion 36. The first blocking portions 35 project toward the respective end portions 20e and 20f at the end of the dimension of the inverter board 20 along the first direction, that is, the connecting direction thereof to the relay connectors 21. The second blocking portions 36 extend along the board surface of the inverter board 20. The second blocking portions 36 project toward the respective end portions 20g at the ends of the dimension of the inverter board 20 along the second direction (the Y-axis direction) perpendicular to the first direction. The first blocking portions 35 and the second blocking portions 36 continue from one another. With this configuration, foreign substances are less likely to enter the clearance C from the all directions along the board surface of the inverter board 20.

(7) The second blocking portion 36 extends along the board surface of the inverter board 20. The second blocking portion 36 projects toward the end portion 20g at the end of the dimension of the inverter board 20 along the second direction perpendicular to the first direction. With this configuration, foreign substances are less likely to enter the clearance C from the second direction perpendicular to the first direction that is along the connecting direction of the inverter board 20.

(8) The blocking portions 36 project toward the respective end portions 20g at the ends of the dimension of the inverter board 20 along the second direction perpendicular to the first direction that is along the connecting direction of the inverter board 20 into the relay connectors 21. With this configuration, foreign substances are less likely to enter the clearance C from the second direction perpendicular to the first direction that is along the connecting direction of the inverter board 20.

(9) The blocking portions 35 and 36 extend along the respective directions in which the end portions 20e to 20g of the inverter board 20 extend. With this configuration, the clearance C is blocked by the blocking portions 35 and 36 continuously for an extending length thereof.

(10) The blocking portions 35 and 36 extend for the entire lengths of the end portions 20e to 20g of the inverter board 20 in the directions in which the end portions 20e to 20g extend. With this configuration, the clearance C is blocked by the blocking portions 35 and 36 continuously for an entire length along the extending direction.
(11) The blocking portions 35 and 36 are in contact with the respective end portions 20e to 20g of the inverter board 20. With this configuration, the clearance C is blocked by the blocking portions 35 and 36.

(12) The blocking portions 35 and 36 extend along the respective directions in which the end portions 20e to 20g of the inverter board 20 extend. The blocking portions 35 and 36 are in contact with the respective end portions 20e to 20g of the inverter board 20. With this configuration, the clearance C is blocked by the blocking portions 35 and 36 continuously for an extending length thereof.

(13) The blocking portions 35 and 36 extend for the entire lengths of the end portions 20e to 20g of the inverter board 20 in the directions in which the end portions 20e to 20g extend. The blocking portions 35 and 36 are in contact with the respective end portions 20e to 20g of the inverter board 20. With this configuration, the clearance C is blocked continuously for the entire length of the end portions 20e to 20g of the inverter board 20 along the extending directions thereof.

(14) The inverter board 20 can be moved between the non-connected position and the connected position. The inverter board 20 is disconnected from the relay connectors 21 at the non-connected position and connected to the relay connectors 21 at the connected position. The positioning structures are provided for positioning the inverter board 20 relative to the chassis 14 with respect to at least one direction along the board surface of the inverter board 20 when the inverter board is at the non-connected position. Therefore, the inverter board 20 at the non-connected position is positioned relative to the chassis 14 with respect to at least one direction along the board surface of the inverter board 20. During setting of the inverter board 20 at the non-connected position or moving of the inverter board 20 from the non-connected position to the connected position, the parts mounted on the inverter board 20 are less likely to touch the parts of the chassis 14.

(15) The positioning structures on the chassis 14 side continue into the respective blocking portions 35 and 36. In this configuration, the positioning structures and the blocking portions 35 and 36 are arranged in the limited space. This contributes to a reduction in size or an improvement in design flexibility.

(16) The positioning structures include the first positioning structure for positioning the inverter board 20 with respect to the first direction along the connecting direction of the inverter board 20 into the relay connectors 21. With this configuration, the inverter board 20 can be positioned with respect to the first direction along the connecting direction of the inverter board 20.

(17) The first positioning structure includes the first positioning protrusion 31 and the first positioning recess 32. The first positioning protrusion 31 is arranged on the chassis 14 side. The first positioning recess 32 is formed in the inverter board 20 so as to receive the first positioning protrusion 31. The first positioning recess 32 is formed such that the clearance is provided between the first positioning protrusion 31 and the edges of the first positioning recess 32. When the inverter board 20 is at the non-connected position, the front end 31a of the first positioning protrusion 31 is in contact with the front edge 32a of the first positioning recess 32 with respect to the connecting direction. The rear end portion 31b of the first positioning protrusion 31 is separated from the rear edge 32b of the first positioning recess 32 with respect to the connecting direction. When setting the inverter board 20 to the non-connected position, the inverter board 20 is less likely to be displaced relative to the chassis 14 to the rear with respect to the connecting direction. The movement of the inverter board 20 is allowed within the range corresponding to the clearances between the first positioning protrusion 31 and the edges of the first positioning recess 32.

(18) When the inverter board 20 is at the connected position, the rear end portion 31b of the first positioning protrusion 31 is in contact with the rear edge 32b of the first positioning recess 32 with respect to the connecting direction. When the inverter board 20 is moved from the non-connected position to the connected position, the inverter bard 20 is less likely to be displaced to the front with respect to the connecting direction relative to the chassis 14. With this configuration, the inverter board 20 at the connected position is positioned relative to the blocking portions 35 and 36. Therefore, the clearance C is properly blocked by the blocking portions 35 and 36.

(19) The first positioning protrusion 31 is arranged on the chassis 14 side and the first positioning recess 32 is formed in the inverter board 20. A configuration in which the first positioning protrusion is arranged on the inverter board 20 side requires special design. In comparison to such a configuration, the inverter board 20 can be prepared with the positioning structure at low cost.

(20) The first positioning recess 32 is formed by cutting out a part of the inverter board 20. The position of the first positioning protrusion 31 in the first positioning recess 32 can be confirmed by viewing the inverter board 20 from the side opposite from the chassis 14. Therefore, the inverter board 20 can be precisely positioned.

(21) The positioning structures include the second positioning structures for positioning the inverter board 20 with respect to the second direction perpendicular to the first direction that is along the connecting direction of the inverter board 20 to the relay connectors 21. With the second positioning structures, the inverter board 20 at the non-connected position is positioned with respect to the second direction perpendicular to the first direction that is along the connecting direction of the inverter board 20.

(22) The second positioning structure is provided on the chassis 14 side. It includes the second positioning portion 33 that is in contact with the inverter board 20 while the inverter board 20 is moved from the non-connected position to the connected position. When the inverter board 20 is moved from the non-connected position to the connected position, the movement thereof is guided by the second positioning portion 33. Therefore, the inverter board 20 can be stably moved. Furthermore, the positional relationships between the inverter board 20 at the connected position and the blocking portions 35 and 36 are determined. Therefore, the clearance C is properly blocked by the blocking portions 35 and 36.

(23) The second positioning portion 33 projects toward the inverter board 20. The inverter board 20 has the cutout 37 that receives the rear positioning portion 33b of the second positioning portion 33. The front end portion 33ba of the rear positioning portion 33b is in contact with the front edge 37a of the cutout 37 when the inverter board 20 is at the non-connected position. As a result, the inverter board 20 is positioned with respect to the first direction. With this configuration, the inverter board 20 is positioned with respect to the first direction and the second direction by the rear positioning portion 33b and the cutout 37.

(24) The positioning structures are provided at two locations away from each other in the front-rear direction along the connecting direction of the inverter board 20 to the relay connectors 21. With this configuration, the inverter board 20 can be further precisely positioned. Furthermore, the positioning structures may be arranged such that a person working on them can visually confirm the positions thereof. With such a configuration, they are easily viewed.

(25) The positioning structure is arranged at the end with respect to the second direction perpendicular to the first direction that is along the connecting direction of the inverter board 20 into the relay connectors 21. In comparison to a configuration in which the positioning structure is arranged around the center with respect to the second direction, design of the wiring patterns or arrangement of the components on the inverter board is less likely to be limited.

(26) The positioning structures are arranged at the ends with respect to the second direction perpendicular to the first direction that is along the connecting direction of the inverter board 20 into the relay connectors 21. In comparison to a configuration in which the positioning structure is arranged around the center with respect to the second direction, design of the wiring patterns or arrangement of the components on the inverter board is less likely to be limited. Furthermore, the inverter board 20 is more precisely positioned by the positioning structures provided at both ends with respect to the second direction.

(27) The covers 22 are arranged between the chassis 14 and the inverter boards 20 and mounted to the chassis 14. The surface of each cover 22 facing the inverter board 20 corresponds to the reference plane BS. The blocking portions 35 and 36 are provided on each cover 22. In comparison to a configuration in which blocking portions are provided on the chassis 14, flexibility in design of the shapes and the arrangement of the blocking portions 35 and 36 improves.

(28) The chassis 14 has the connector insertion holes 14b that are through holes in which the relay connectors 21 are inserted. Each cover 22 has the connector holes 25 in which the relay connectors 21 are fitted. The connector holes 25 are through holes continue into the connector insertion holes 14b. With this configuration, the relay connectors 21 can be mounted to the chassis 14 with the relay connectors 21 inserted in the connector insertion holes 14b of the chassis 14 and the connector hole 25 of the covers 22.

(29) Each connector insertion hole 14b is larger than the connector holes 25. With this configuration, each relay connector 21 is properly separated from the edges of the corresponding connector insertion hole 14b of the chassis 14. Even when high-voltage currents flow through the relay connectors 21, the currents do not leak to the chassis 14 side.

(30) Each cover 22 includes the holding protrusions 26 that are fitted in the connector insertion holes 14b. Each holding protrusion 26 is provided between the edge of the connector insertion hole 14b of the chassis 14 and the relay connector 21. Therefore, the relay connector 21 is properly isolated from the chassis 14. Furthermore, the cover 22 can be positioned relative to the chassis 14.

(31) The connector holes 25 are formed in each cover 22 along the second direction perpendicular to the first direction that is along connecting direction of the inverter board 20 into the relay connectors 21. Each front blocking portion 35a is arranged in the area of the cover 22 between the adjacent connector holes 25. With this configuration, foreign substances are less likely to enter the clearance between the inverter board 20 and the cover 22 from the front with respect to the connecting direction via spaces between the adjacent relay connectors 21.

(32) The ribs 27 are provided at the edges of the connector holes 25. The ribs 27 project toward the inverter board 20. The front blocking portions 35a are connected to the ribs 27. The ribs 27 and the front blocking portions 35a are connected to one another. Therefore, the clearance C is blocked on the front side with respect to the connecting direction. Therefore, foreign substances are properly blocked. Moreover, high strength can be achieved.

(33) The board stoppers 34 are provided on the chassis 14 side. The board stoppers 34 are in contact with the inverter boards 20 from the side opposite from the chassis 14. The board stoppers 34 restrict the deformation of the inverter boards 20 toward the side opposite from the chassis 14.

(34) The board stoppers 34 are arranged such that the front end portion 20e of the inverter board 20 with respect to the connecting direction is pressed against the board stoppers 34 when the inverter board 20 is at the connected position. With this configuration, reliability in connection between the inverter board 20 and the relay connectors 21 improves.

(35) The board support portions 30 are provided on the chassis 14 side. The board support portions 30 project from the reference plane BS toward the center of the inverter board 20 and support the inverter board 20 with the ends thereof being in contact with the inverter board 20. With this configuration, the chassis 14 and the inverter board 20 can be maintained at preferable positional relationship with respect to the direction perpendicular to the board surface of the inverter board 20. Therefore, the clearance C can be constantly blocked by the blocking portions 35 and 36.

(36) The support protrusions 30a of the board support portions 30 are arranged adjacent to the relay connectors 21. Because parts of the inverter board 20 around the relay connectors 21 are less likely to be deformed, for example, warped, the reliability in connection between the inverter board 20 and the relay connectors 21 improves.

The present invention is not limited to the above embodiments explained in the above description. The following embodiments may be included in the technical scope of the present invention, for example. In the following modifications, the parts similar to the above embodiment will be indicated by the same symbols and will not be illustrated or explained.

### First Modification

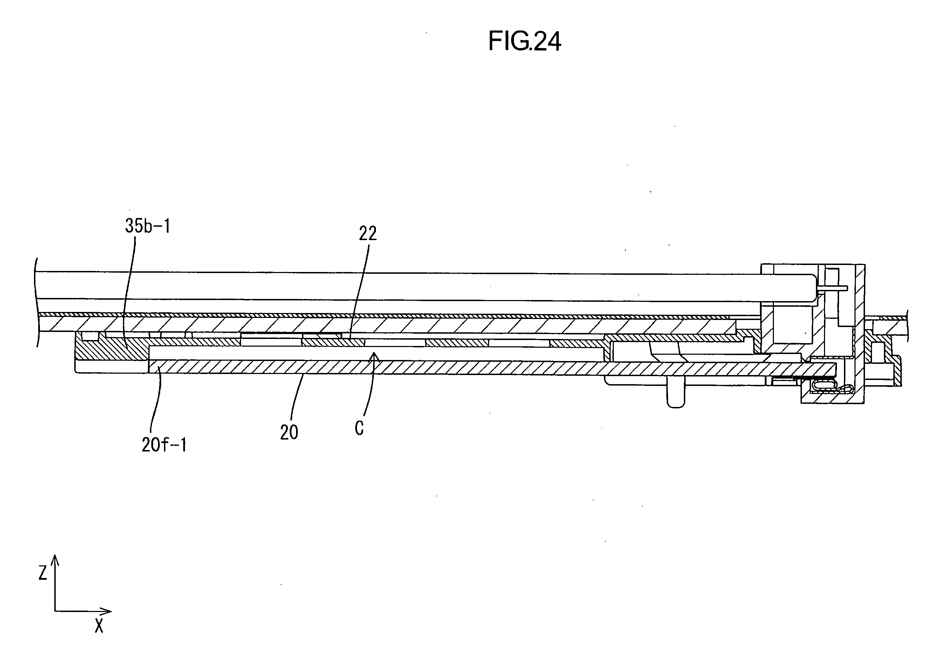

The first modification of the backlight unit 12 of the first embodiment will be explained with reference to FIG. 24. A relationship between rear blocking portions 35b-1 and the inverter board 20 that is at the connected position will be explained.

As illustrated in FIG. 24, a rear end portion 20f-1 of the inverter board 20 at the connected position is more to the front than the rear blocking portions 35b-1 of the covers 22. Specifically, a rear end surface of the inverter board 20 at the connected position is substantially on the same plane as front end surfaces of the rear blocking portions 35b-1. The rear end portion 20f-1 is not in contact with the rear blocking portions 35b-a. With this configuration, the clearance C between the inverter board 20 and each cover 22 is blocked by the rear blocking portions 35b-1 without any openings on the rear side. Therefore, the same level of function for blocking foreign substances as the first embodiment can be exerted.

### Second Modification

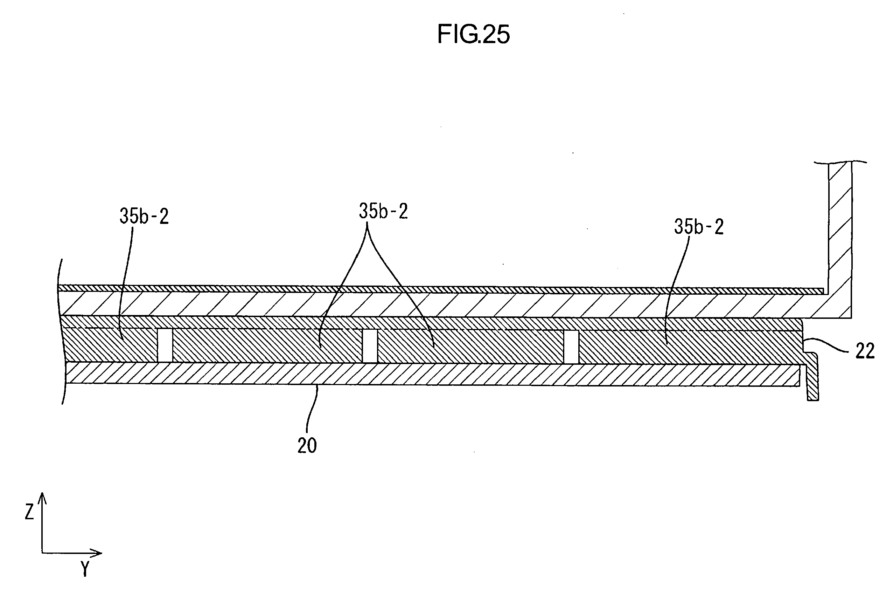

The second modification of the backlight unit 12 of the first embodiment will be explained with reference to FIG. 25. Rear blocking portions 35b-2 having a different shape will be explained.

As illustrated in FIG. 25, the rear blocking portions 35b-2 are separately arranged from each other along the Y-axis direction at the rear end portion of the cover 22. Each rear blocking portion 35b-2 has a block-like shape that extends in the Y-axis direction for a specified length. The rear blocking portions 35b-2 are in contact with the inverter board 20 at the connected position or the non-connected position. Spaces between the adjacent rear blocking portions 35b-2 open to the rear side; however, the opening size of each space is sufficiently smaller than foreign substances that might enter the clearance. Therefore, a function for blocking the foreign substances is properly exerted.

### Third modification

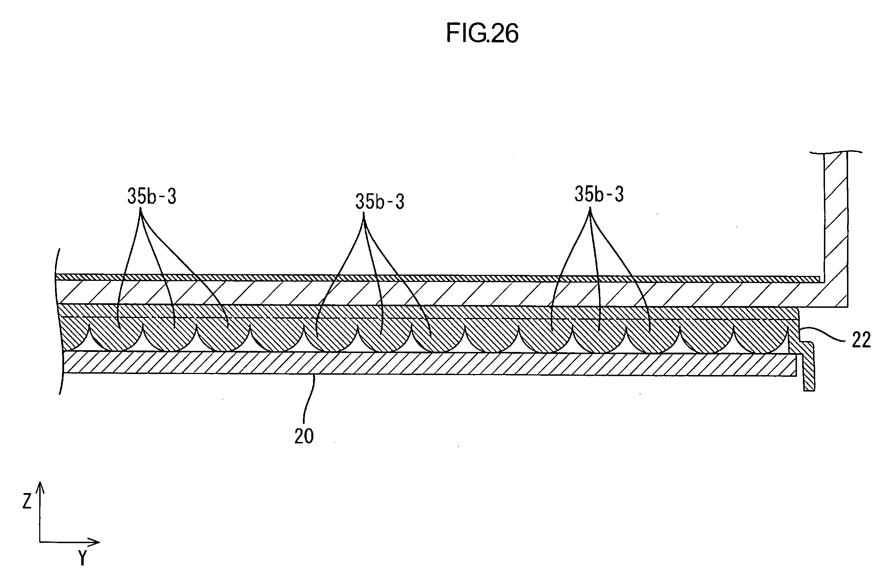

The third modification of the backlight unit 12 of the first embodiment will be explained with reference to FIG. 26. Rear blocking portions 35b-3 having a different shape will be explained.

As illustrated in FIG. 26, the rear blocking portions 35b-2 are arranged continuously along the Y-axis direction at the rear end portion of the cover 22 without gaps therebetween. Each rear blocking portion 35b-3 has a semi-circular cross section along the Y-axis direction. The rear blocking portions 35b-3 are in contact with the inverter board 20 at the connected position or the non-connected position. The rear blocking portions 35b-3 are in line contact with the inverter board 20 in the X-axis direction and in point contact with the inverter board 20 in the Y-axis direction. Because outer surfaces of the rear blocking portions 35b-3 are curved, spaces are provided between the adjacent rear blocking portions 35b-3. The spaces open to the rear side; however, the opening size thereof is sufficiently smaller than foreign substances that might enter the clearance. Therefore, a function for blocking the foreign substances is properly exerted.

### Fourth modification

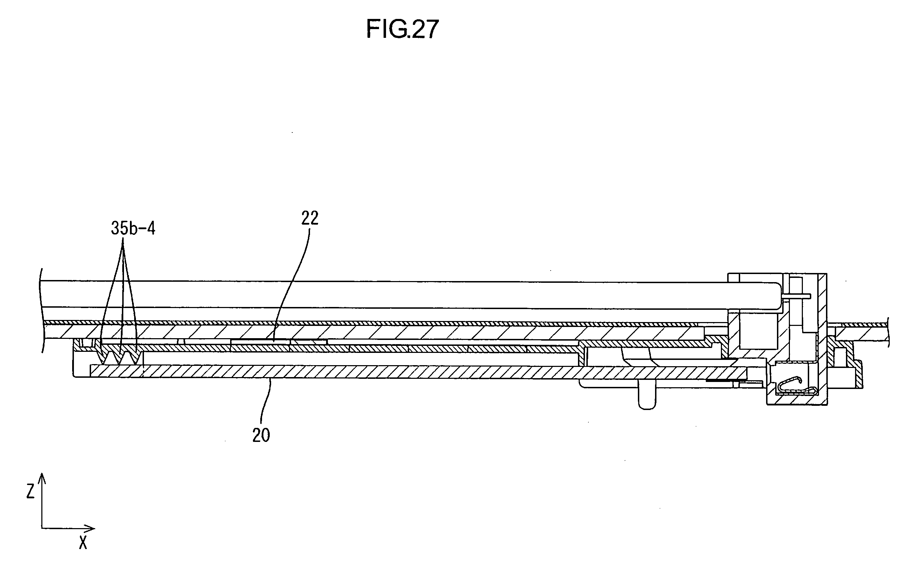

The fourth modification of the backlight unit 12 of the first embodiment will be explained with reference to FIG. 27. Rear blocking portions 35b-4 having a different shape will be explained.

As illustrated in FIG. 35b-4, a plurality (more specifically three) of the rear blocking portions 35b-4 are arranged along the X-axis direction at the rear end portion of the cover 22. Each rear blocking portion 35b-4 has a triangular cross section along the X-axis direction. The rear blocking portions 35b-4 are in contact with the inverter board 20 at the connected position or the non-connected position. The rear blocking portions 35b-4 are in line contact with the inverter board 20 with respect to the Y-axis direction and in point contact with the inverter board 20 with respect to the X-axis direction.

### <Other embodiment>

The present invention is not limited to the above embodiments explained in the above description. The following embodiments may be included in the technical scope of the present invention, for example.
(1) In the above embodiments, the "reference plane" corresponds to the surface of the rear portion of the cover facing the inverter board. However, the "reference plane" can be set at a different part of the cover if the cover is formed in a different shape from the above embodiment. Any surface on the chassis side a predetermined distance away from the inverter board could be the "reference plane."

(2) In the above embodiments, the front blocking portions of the first blocking portions are separately arranged in the areas except for the arrangement areas of the relay connectors. However, a front blocking portion that extend for an entire length of the front end portion of the inverter board along the Y-axis direction may be arranged more to the rear than the relay connectors. In this case, the front blocking portion can be formed in a preferable shape similar to the rear blocking portions of the modifications.

(3) In the above embodiments, the front blocking portions of the first blocking portions are not in contact with the inverter board at the non-connected position. However, the front blocking portions may be configured so as to be in contact with the inverter board at both of the non-connected position and the connected position.

(4) In the first modification, the front end surface of the rear blocking portion of the first blocking portions is on the same plane as the rear end surface of the inverter board at the connected position. Those surfaces may be arranged with a gap therebetween. A positional relationship between the rear blocking portion and the inverter board at the connected position can be preferably set as long as the opening of the clearance between the inverter board and the cover is limited to a specified size.

(5) In the above embodiments, the front end surface of the rear blocking portion of the first blocking portions is in contact with the inverter board at the connected position. However, they may not be in contact with each other. The front blocking portion may be set so as not to be in contact with the inverter board similar to the rear blocking portion of the first modification or the above embodiment (4). A positional relationship between the front blocking portion and the inverter board at the connected position can be preferably set as long as the opening of the clearance between the inverter board and the cover is limited to a specified size.

(6) In the above embodiments, the second blocking portions are in contact with the inverter board at the connected position. However, they may not be in contact with the inverter board. The second blocking portions may be set so as not to be in contact with the inverter board similar to the rear blocking portion of the first modification or the above embodiment (4). A positional relationship between the second blocking portion and the inverter board at the connected position can be preferably set as long as the opening of the clearance between the inverter board and the cover is limited to a specified size.

(7) In the above embodiments, the second blocking portions are in contact with the front surface of the inverter board. However, the second blocking portions may be in contact with the side surfaces of the inverter board. In that case, the second blocking portions also function as the second positioning portions.

(8) In the above embodiments, each second blocking portion extends for the entire length of the side end portion of the inverter board. However, the second blocking portion may include a plurality of portions arranged along the direction in which the side end portion of the inverter board extends. More specifically, the second blocking portion may be configured similar to the rear blocking portions of the second to the fourth modifications.

(9) In the above embodiments, the firs blocking portions and the second blocking portions are connected to each other. However, the first blocking portions and the second blocking portions may be separated from each other. The following configurations are also included in the scope of the present invention. The front blocking portions may be connected to the second blocking portions. The rear blocking portions may be separated from the second blocking portions. The rear blocking portions may be connected to the second blocking portions. The front blocking portions may be separated from the second blocking portions. In that case, only one of the second blocking portions may be connected to (or separated from) the front blocking portions or the rear blocking portions.

(10) In the above embodiments, the first blocking portions include the front blocking portions and the rear blocking portions. However, the front blocking portions or the rear blocking portions may be provided. Furthermore, only the second blocking portions may be provided without the front blocking portions and the rear blocking portions.

(11) In the above embodiments, a pair of the second blocking portion is provided. However, only one second blocking portion may be provided. Furthermore, the second blocking portions may not provided and only the first blocking portion may be provided.

(12) In the above embodiments, the first positioning protrusions are connected to the respective second blocking portions. Moreover, the second positioning portions are connected to the respective rear blocking portions and the respective second blocking portions. However, the first positioning protrusions may be separated from the second blocking portions or the second positioning portions may be separated from the rear blocking portions and the second blocking portions.

(13) In the above embodiments, the inverter board has the cutouts corresponding to the rear positioning portions. However, the cutouts may not be required when the rear positioning portions are arranged with respect to the Y-axis direction similar to the front positioning portions.

(14) In the above embodiments, the second positioning portions arranged away from each other in front-rear direction are provided in a pair. However, each front positioning portion and the corresponding rear positioning portions may be connected to each other and provided in one piece. Furthermore, either the front positioning portions or the rear positioning portions may not be provided.

(15) In the above embodiments, the blocking portions are arranged so as to be in contact with or close to the front end portion of the inverter board. However, the blocking portions may be arranged so as to be in contact with or close to a part of the inverter board slightly off the front end portion. As long as the blocking portions are arranged so as to be in contact with or close to a part of the inverter board outer than the area in which the components are mounted or the wiring patterns are formed, foreign substances are less likely to touch the components or the wiring patterns.

(16) In the above embodiments, two covers are attached to the chassis. Each cover is arranged at a corresponding long-side end of the chassis. However, one, three or more covers may be used. When only one cover is used, a pair of the second blocking portions and a pair of the second positioning portions may be provided. They may be arranged at the respective ends of the cover with respect to the Y-axis direction.

(17) In the above embodiments, the first positioning structures and the second positioning structures are provided as the positioning structures for positioning the inverter board. However, only the first positioning structures may be provided for positioning the inverter board only with respect to the X-axis direction. Furthermore, only the second positioning structures may be provided for positioning the inverter board only with respect to the Y-axis direction.

(18) In the above embodiments, the first positioning protrusions are provided on the covers on the chassis side and the first positioning recesses are provided in the inverter boards as the first positioning structures. However, the first positioning recesses may be provided in the covers on the chassis side, and the first positioning protrusions may be provided on the inverter boards.

(19) In the above embodiments, the first positioning recesses are formed by cutting out parts of the inverter boards. However, the first positioning recesses may be formed by denting parts of the surfaces of the inverter boards. To form the first positioning recesses in the covers on the chassis side, they are formed in the same manner as above. Namely, the first positioning recesses may be formed by denting parts of the rear surfaces of the covers.

(20) In the above embodiments, the rear end portions of the first positioning protrusions are in contact with the rear end edges of the first positioning recesses when the inverter board is at the connected position. However, the rear end portions may not be in contact wit the rear edges. In that case, the movement of the inverter board to the front is restricted by the front end surfaces of the connector connecting portions held against the extending portions of the front walls.

(21) In the above embodiments, the board stoppers are in contact with the front end portions of the inverter board. However, the board stoppers may be arranged at different locations such that the board stoppers are in contact with portions of the inverter board other than the front end portions.

(22) In the above embodiments, the first positioning structures are arranged away from each other in the front-rear direction. Moreover, the second positioning structures are arranged also away from each other in the front-rear direction. However, the first positioning structure may be arranged at only one location with respect to the X-axis direction (the first direction), and the second positioning structure may be arranged at only location with respect to the X-axis direction.

(23) In the above embodiments, the first positioning structures are arranged at the respective ends of the inverter board with respect to the Y-axis direction (the second direction) . The second positioning structures are also arranged at the respective ends. However, the first positioning structure and the second positioning structure are arranged only at one of the ends of the inverter board with respect to the Y-axis direction. Furthermore, the first positioning structure and the second positioning structure may be arranged around the center of the inverter board with respect to the Y-axis direction.

(24) Different kinds of components from those in the above embodiments may be mounted on the inverter boards.

(25) In the above embodiments, the covers are mounted to the chassis. However, the covers may not be included and the chassis may include the positioning structures.

(26) In the above embodiments, each connector insertion hole of the chassis is larger than the connector hole of the cover. However, the connector insertion hole and the connector holes may be formed in the same size or having an opposite size-relationship. In that case, the holding protrusions of the cover may not be provided.

(27) In the above embodiments, the first positioning protrusions are connected to the second positioning parts. However, they may be separated and independently provided.

(28) In the above embodiments, the covers include the support protrusions, the front vertical support walls, the rear vertical support walls and the horizontal support walls as the board support portions. However, one or more, even all, of them may not be included. The number, shapes, and arrangements of the board support portions may be altered as necessary.

(29) In the above embodiments, each inverter board is directly connected to the relay connectors. However, a relay board electrically connected to the inverter board via an FPC may be connected to the relay connectors such that the inverter board is indirectly connected to the relay connecters.

(30) In the above embodiments, each inverter board is provided for the electrodes at the respective ends of the cold cathode tubes. However, one of the inverter boards may not be provided and the cold cathode tubes may be driven by a single inverter board on one side. In that case, the relay connectors on a side on which the inverter board is not provided (i.e., on a lower potential side) may be connected to a grounding circuit.

(31) In the above embodiments, each cold cathode tube includes the outer lead extending from the ends of the glass tube, and the outer leads are connected to the connectors. However, ferrules connected to the outer leads may be fitted onto the glass tube, and the ferrules may be connected to the connectors.

(32) In the above embodiments, the cold cathode tubes that are one kind of fluorescent tubes are used as light sources. However, other types of fluorescent tubes including hot cathode tubes can be used. Furthermore, discharge tubes (e.g., mercury lamps) other than the fluorescent tubes can be used.

(33) In the above embodiments, the TFTs are used as switching components of the liquid crystal display device. However, the technology described herein can be applied to liquid crystal display devices using switching components other than TFTs (e.g., thin film diodes (TFDs)). Furthermore, it can be applied to white-and-black liquid crystal display devices other than the color liquid crystal display device.

(34) In the above embodiments, the liquid crystal display device including the liquid crystal panel as a display component is used. However, the present invention can be applied to display devices including other types of display components.

(35) In the above embodiments, the television receiver including the tuner is used. However, the technology can be applied to a display device without the tuner.

## Claims

1. A lighting device comprising:
a light source;
a chassis housing the light source;
a power supply board arranged a predetermined amount of clearance away from a reference plane on a chassis side opposite from the light source and configured to supply drive power to the light source;
at least one relay connector mounted to the chassis such that the power supply board is connected thereto so as to be removable in one direction along a board surface of the power supply board, and configured to relay power supply from the power supply board to the light source; and
a blocking portion projecting from the reference plane on the chassis side toward an end portion of the power supply board and extending from one end of the end portion to another end with respect to an extending direction in which the end portion extends, the blocking portion blocking the clearance between the power supply board and the reference plane.

2. The lighting device according to claim 1, wherein the blocking portion projects toward an end portion of the power supply board at an end with respect to a first direction along a connecting direction in which the power supply board is connected to the relay connector.

3. The lighting device according to claim 2, wherein the blocking portion includes a rear blocking portion that projects toward a rear end portion of the power supply board at a rear end with respect to the connecting direction of the power supply board to the relay connector.

4. The lighting device according to any one of claims 2 and 3, wherein the blocking portion includes a front blocking portion that projects toward a front end portion of the power supply board at a front end with respect to the connecting direction of the power supply board to the relay connector.

5. The lighting device according to claim 2, wherein the blocking portion includes a rear blocking portion and a front blocking portion, the rear blocking portion projecting toward a rear end portion of the power supply board at a rear end with respect to the connecting direction of the power supply board to the relay connector, and the front blocking portion projecting toward a front end portion of the power supply board at a front end with respect to the connecting direction.

6. The lighting device according to any one of claims 1 to 5, wherein:
the blocking portion includes a first blocking portion and a second blocking portion, the first blocking portion projecting toward an end portion of the power supply board at an end with respect to a first direction along a connecting direction of the power supply board to the relay connector, the second blocking portion projecting toward an end portion of the power supply board at an end with respect to a second direction along the board surface of the power supply board and perpendicular to the first direction; and
the first blocking portion and the second blocking portion are connected to each other.

7. The lighting device according to any one of claims 1 to 5, wherein:
the blocking portion includes a pair of first blocking portions and a pair of second blocking portions, the first blocking portions projecting toward respective end portions of the power supply board at respective ends with respect to a first direction along a connecting direction of the power supply board to the relay connector, the second blocking portions projecting toward respective end portions of the power supply board at ends with respect to a second direction along the board surface of the power supply board and perpendicular to the first direction; and
the first blocking portions and the second blocking portions are connected to one another.

8. The lighting device according to any one of claims 1 to 5, wherein the blocking portion projects toward an end of the power supply board at an end with respect to a second direction along the board surface of the power supply board and perpendicular to a first direction that is along the connecting direction of the power supply board is connected to the relay connector.

9. The lighting device according to any one of claims 1 to 5, wherein the blocking portion projects toward end portions of the power supply board at ends with respect to a second direction along the board surface of the power supply board and perpendicular to a first direction that is along the connecting direction of the power supply board.

10. The lighting device according to any one of claims 1 to 9, wherein the blocking portion extends along an extending direction in which the end portion of the power supply board extends.

11. The lighting device according to any one of claims 1 to 9, wherein the blocking portion extends along an extending direction in which the end portion of the power supply board extends for an entire length of the end portion of the power supply board.

12. The lighting device according to any one of claims 1 to 11, wherein the blocking portion is in contact with the end portion of the power board.

13. The lighting device according to claim 12, wherein the blocking portion extends along an extending direction in which the end portion of the power supply board extends, and is in contact with the end portion of the power supply board for an entire length thereof.

14. The lighting device according to claim 12, wherein the blocking portion extends along an extending direction in which the end portion of the power supply board extends for an entire length of the end portion of the power supply board, and is in contact with the end portion of the power supply board for an entire length thereof.

15. The lighting device according to any one of claims 1 to 14, further comprising a positioning structure, wherein:
the power supply board is movable between a non-connected position at which the power supply board is disconnected from the relay connector and a connected position at which the power supply board is connected to the relay connector; and
the positioning structure is provided for positioning the power supply board at the non-connected position with respect to at least one of directions along the board surface of the power supply board relative to the chassis.

16. The lighting device according to claim 15, wherein the positioning structure on the chassis side is connected to the blocking portion.

17. The lighting device according to any one of claims 15 and 16, wherein the positioning structure includes a first positioning structure for positioning the power supply board in the first direction along the connecting direction of the power supply board to the relay connector.

18. The lighting device according to claim 17, wherein the first positioning structure includes a first positioning protrusion and a first positioning recess, the first positioning protrusion being provided on either one of the power supply board and the chassis, the first positioning recess being provided in the other one of the power supply board and the chassis so as to receive the first positioning protrusion with a clearance with respect to the connecting direction such that a front end portion of the first positioning protrusion is in contact with a front edge of the first positioning recess with respect to the connecting direction and a rear end portion of the first positioning protrusion is separated from a rear edge of the first positioning recess with respect to the connecting direction with the power supply board at the non-connected position.

19. The lighting device according to claim 18, wherein the rear end portion of the first positioning protrusion is in contact with the rear edge of the first positioning recess with the power supply board at the connected position.

20. The lighting device according to any one of claims 18 and 19, wherein the first positioning protrusion and the first positioning recess are provided on the chassis and in the power supply board, respectively.

21. The lighting device according to claim 20, wherein the first positioning recess is formed by cutting a part of the power supply board.

22. The lighting device according to any one of claims 15 to 21, wherein the positioning structure includes a second positioning structure that positions the power supply board with respect to the second direction perpendicular to the first direction along the connecting direction of the power supply board to the relay connector.

23. The lighting device according to claim 22, wherein the second positioning structure includes a second positioning portion provided on the chassis side and in contact with the power supply board during a movement of the power supply board between the non-connected position and the connected position.

24. The lighting device according to claim 23, wherein:
the second positioning portion projects toward the power supply board;
the power supply board has a cutout that receives the second positioning portion; and
the second positioning portion and the cutout are configured to position the power supply board with respect to the first direction with a front end of the second positioning portion being in contact with a front edge of the cutout of the power supply board at the non-connected position.

25. The lighting device according to any one of claims 15 to 24, wherein the positioning structure includes two portions that are away from each other in a front-rear direction along the connecting direction of the power supply board to the relay connector.

26. The lighting device according to any one of claims 15 to 25, wherein the positioning structure is arranged at the end with respect to the second direction perpendicular to the first direction along the connecting direction of the power supply board to the relay connector.

27. The lighting device according to any one of claims 15 to 25, wherein the positioning structure includes two portions arranged at the ends with respect to the second direction perpendicular to the first direction along the connecting direction of the power supply board to the relay connector.

28. The lighting device according to any one of claims 1 to 27, further comprising a cover mounted to the chassis between the power supply board and the chassis and having a surface opposite the power supply board on the reference plane, wherein
the blocking portion is provided on the cover.

29. The lighting device according to claim 28, wherein:
the chassis has a connector insertion hole that is a through hole in which the relay connecter is inserted; and
the cover has a connector hole in which the relay connector is fitted, the connector hole continuing into the connector insertion hole.

30. The lighting device according to claim 29, wherein the connector insertion hole is larger than the connector hole.

31. The lighting device according to claim 30, wherein the cover has a holding protrusion that is fitted in the connector insertion hole.

32. The lighting device according to any one of claims 28 to 31, wherein:
the cover has a plurality of connector holes for a plurality of relay connectors of the at least one relay connector, the connector holes being formed parallel to each other and along the second direction perpendicular to the first direction that is along the connecting direction of the power supply board to the relay connectors; and
the blocking portion is provided in an area of the cover between the adjacent connector holes.

33. The lighting device according to claim 32, further comprising a rib protruding from an edge of the connector hole toward the power supply board, wherein the blocking portion is connected to the rib.

34. The lighting device according to any one of claims 1 to 33, further comprising a board stopper on the chassis side, the board stopper being in contact with the power supply board from a side opposite from the chassis.

35. The lighting device according to claim 34, wherein the board stopper is in contact with the front end portion of the power supply board at the front end with respect to the connecting direction of the power supply board at the connected position.

36. The lighting device according to any one of claims 1 to 35, further comprising a board support portion projecting from the reference plane toward a center of the power supply board and being in contact with the power supply board so as to support the power supply board.

37. The lighting device according to claim 36, wherein the board support portion is arranged adjacently to the relay connector.

38. A display device, comprising:
the lighting device according to any one of claims 1 to 37; and
a display panel arranged configured to provide display using light from the lighting device.

39. The display device according to claim 38, wherein the display panel is a liquid crystal panel including liquid crystals sealed between substrates.

40. A television receiver comprising the display device according to any one of claims 38 and 39.
